# EUROPEAN PATENT SPECIFICATION

(11) **EP 1 353 986 B1**
(45) Date of publication and mention of the grant of the patent: **12.04.2006**
(21) Application number: 01991087.6
(22) Date of filing: 13.11.2001
(51) Int. Cl.: C08K 5/08, C07C 50/18, B29C 65/16

(54) **COLORED THERMOPLASTIC RESIN COMPOSITIONS FOR LASER WELDING, ANTHRAQUINONE COLORANTS THEREFOR AND MOLDED PRODUCT THEREFROM**
GEFÄRBTE THERMOPLASTISCHE HARZZUSAMMENSETZUNGEN ZUM LASERSCHWEISSEN, ANTHRACHINON-FARBMITTEL DAFÜR UND FORMTEIL DARAUS
COMPOSITIONS DE RESINE THERMOPLASTIQUE COLOREE POUR SOUDAGE PAR LASER, COLORANTS D'ANTHRAQUINONE ET PRODUIT MOULE

(30) Priority: 13.11.2000 US 247937 P
(43) Date of publication of application: 22.10.2003
(73) Proprietor: E. I. du Pont de Nemours and Company, Wilmington, DE 19805 (US); Orient Chemical Industries Ltd, Neyagawa, Osaka 572-8581 (JP)
(72) Inventor: KOSHIDA, Reiko, Utsunomiya, Tochigi 321-0945 (JP); HATASE, Yoshiteru, Kashihara-shi, Nara 634-0007 (JP); HAYASHI, Ryuichi, Machida, Tokyo 121-0062 (JP); SUMI, Hiroyuki, Kawachi-gun, Tochigi 329-0434 (JP)
(74) Representative: Morf, Jan Stefan
(86) International application number: PCT/US2001/048324
(87) International publication number: WO 2002/038664

(56) References cited:
- US-A- 4 102 639
- US-A- 4 755 012
- US-A- 4 775 012
- US-A- 5 663 029
- US-A- 5 893 959
- US-A- 5 973 038

## Description

### FIELD OF THE INVENTION

The instant invention relates to thermoplastic resin compositions containing black colorants and suitable for laser welding. More particularly, the invention relates to such compositions having improved laser weldability and mechanical properties.

### BACKGROUND OF THE INVENTION

It is known in the art to join together two articles made of resins (and respectively opaque and transparent) by positioning them in contact with each other, transmitting a predetermined amount of laser beam focused on the junction of them and causing the junction portion to be melted and joined together ("laser welding"). Several advantages flow from laser welding versus conventional methods of joining plastic parts. For example, laser welding is widely known for its simple operation, labor savings, improvement of productivity, clear joints, and reduction of production cost. It is useful in various applications including the preparation of molded articles, including hollow shapes, in automobile industries and electric and electronic industries. Recently, work has intensified in the area of blends of thermoplastic resin and a colorant containing an organic dye or pigment. Better control of the conversion of laser energy to heat is achieved by the addition of such colorants to the resins. Laser beams penetrate through transparent articles positioned closer to the laser beam source, and are largely absorbed in the opaque article, which has a relatively higher absorption coefficient in comparison with the aforementioned transparent article. Careful attention to the amount of the colorants therein results in the junction portion being melted and the articles joined together.

See for example Japanese Published (Koukoku) Patent No.62-49850 and Japanese Published (Koukoku) Patent No.5 (93)-42336. Other resin compositions associated with the laser welding are described in U.S.Pat.No.5,893,959 which discloses transparent and opaque workpiece parts welded together by a laser beam along a joining zone. Both parts contain black dye pigments such as carbon black to cause them to offer a substantially homogenous visual impression even after welding.

Other illustrations of the laser welding of compositions are found in U.S.Pat. No.5,893,959. For example, the color of the thermoplastic components may be black (carbon black or nigrosine) which is commonly and widely used in the automobile industry among other applications. However, carbon black and nigrosine cannot transmit a laser beam with a main wavelength in the infra-red region (1200 nm to 800 nm), such as Nd:YAG laser and a diode laser, both of which are of wide use in industries.

Surprisingly, it has now been found that thermoplastic resin compositions both black in appearance can be used for laser-welded molded articles for both the transparent and opaque parts subjected to the laser beam. A significantly improved transmission to near-infrared light of the laser beam, with excellent and balanced heat-resistance and mechanical properties as required in automobile applications, is achieved by including a specific weight percentage of black dyes comprising amine salt of anthraquinone dyes.

Using these components, thermoplastic resin compositions can be utilized for laser welding and exhibiting improvements in moldability, solubility in the thermoplastic resin, bleeding- and blooming-resistance as well as transparency to the wavelength of a laser beam and resistance to chemicals.

### SUMMARY OF THE INVENTION

There is disclosed and claimed herein thermoplastic resin compositions for laser welding comprising thermoplastic resin and laser-transmitting black colorant which transmits means infrared laser light from 800-1200nm comprising amine salt of anthraquinone dye. More particularly, this black colorant which transmits means infrared laser light from 800-1200nm comprises amine salt ofanthraquinone dyes of formula [I], or formula [II], wherein
Formula[I] is: 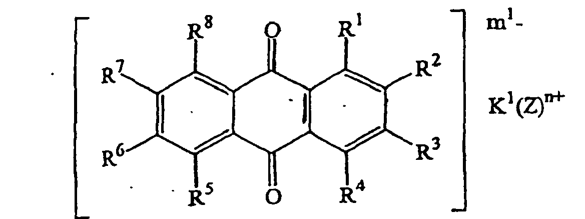 wherein R¹ to R⁸, which may be the same or different, are independently selected from the group consisting of H, alkyl, aryl, alkenyl, alkoxy, amino, hydroxy, halogen atom, acyl, acyloxy, acylamide, acyl-N-alkylamide, carboxyl, alkoxycarbonyl, cyclohexylamide, sulfonyl, formula [I-a], or -Y-W; and at least one of R¹ to R⁸ is of formula [I-a]; wherein Y is S, O, or NH, and W is selected from unsubstituted or substituted alkyl group, alkenyl group, and unsubstituted or substituted aryl group, wherein (Z)ⁿ⁺ represents ammonium ion or a cation derived from an organic amine compounds or a basic dye wherein n is 1 or 2, m¹ is an integer from 1 to 4 and K¹ is the ratio of m¹/ n;
formula [I-a] is: 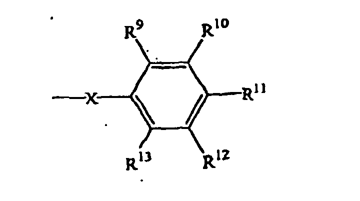 wherein X is O or NH, and R⁹ to R¹³, which may be the same or different, are independently selected from the group consisting of H, alkyl, aryl, alkenyl, alkoxy, amino, N-alkylamide, N-arylamide, hydroxy, halogen atom, acyl, acyloxy, acylamide, acyl-N-alkylamide, carboxyl, alkoxycarbonyl, or sulfonyl. In the above, at least one of R¹ to R⁸ and R⁹ to R¹³ is sulfonyl group.
Formula [II] is: 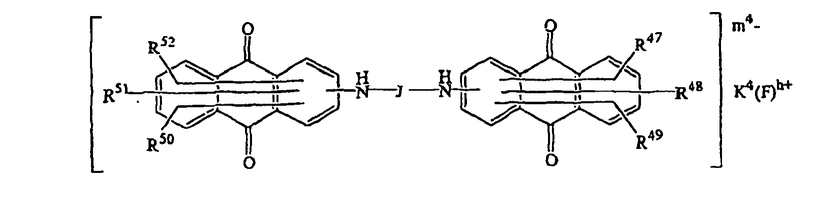 wherein R⁴⁷ to R⁵², which may be the same or different, are independently selected from the group consisting of H, alkyl, aryl, alkenyl, alkoxy, amino, N-alkylamide, N-arylamide, hydroxy, halogen atom, acyl, acyloxy, acylamide, acyl-N-alkylamide, carboxyl, alkoxycarbonyl, or sulfonyl, and at least one of R⁴⁷ to R⁵² is of sulfonyl. (F)^{h+} represents ammonium ion or a cation derived from an organic amino compounds or a basic dye wherein h is 1 or 2, m⁴ is an integer from 1 to 4 and K⁴ is the ratio of m⁴ / h.
Formula J in formula [II] is selected from formula [II-a] or formula [II-b] and binds two anthraquinone.
formula [II-a]: 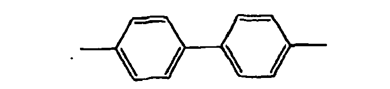 formula-[II-b]: 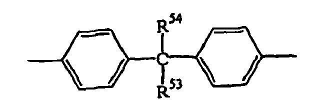 wherein R⁵³ to R⁵⁴ , which may be the same or different, are independently selected 0 from the group consisting of alkyl(having 1 to 8 carbon atoms) or hydrogen.

The amine salt of anthraquinone dyes used as colorants in the invention exhibit colors of red, blue, violet and green. It is possible to obtain black shades by mixing the dye salts mentioned above with red dyes such as perinone dyes and /or yellow dyes or monoazo metal complex dyes or anthrapyridone dyes at predetermined weight ratios.

### BRIEF DESCRIPTION OF THE DRAWINGS

The invention will be better understood upon having reference to the drawings herein.
Figure 1 is a view of the articles in contact and with a laser beam applied thereto;
Figure 2 is identical to Figure 1, but with articles of the same color.
Figure 3 is a side view of articles positioned for a laser welding test;
Figure 4 is a top view of articles positioned for a laser welding test;
Figure 5 is both a side view and a top view of a test piece used in the laser welding test; and
Figure 6 is a side view of the test piece moved into position for the laser welding test.

### DETAILED DESCRIPTION OF THE INVENTION

The dye salts of the desired structure represented by formula [I] or formula [II] used in the invention and described above are prepared by commonly known methods, as is readily appreciated by those having skill in the art. One convenient technique is to react anthraquinone dyestuff with organic amine in a solvent. Formula [I] or formula [II] reacted by this way has good transmittance in a main laser beam wavelength (1200nm to 800nm).

Basic dyes listed in the color index and useful in the instant invention include,
C.Lbasic red dye: C.I.basic red1, 2, 3, 4, 5, 6, 8, 9, 10, 11, 12, 13, 15, 16, 17, 19, 20, 26, 27, 35, 36, 37, 48, 49, 52, 53, 54, 66, 68,
C.I.basic blue dye: C.I.basic blue 1, 2, 3, 4, 5, 6, 7, 8, 9, 10, 11, 12, 13, 14, 15, 18, 20,21,22,23,24,25,26,35,36,37, 45, 46, 47, 49, 50, 55, 56, 60, 62, 67, 75, 77, 79, 80, 81, 83, 87, 88, 89, 90, 94, 95, 96, 97,
C.I.basic violet dye: C.I.basic violet 1, 2, 3, 4, 5, 6, 7, 8, 10, 11, 12, 13, 14, 15, 16, 17, 20, 21, 23, 24, 25, 27, 40,
C.Lbasic green dye: C.I.basic green 1, 3, 4, 6, 9, 10,

Suitable amines for use in producing the above-mentioned anthraquinone dyes in dyestuffs and/or capable of salt formation in dyestuffs include aliphatic amine, alicyclic amine, alkoxyalkyl amine, amine having alkanol, diamine, amine of guanidine derivatives, and aromatic amine.

Examples of anthraquinone acid dyes which are useful in preparation of the dye salts of formula [I] used as colorants in the compositions of the invention are given below in Tables 1-1 and 1-2. Designations in the left hand column (such as "I-2" and "I-13") will assist the reader in understanding discussions about specific dye salts later in the description.

**Tablel-1**

| Pro. Ex. No. | R¹,R²,R³,R⁴,R⁵,R⁶,R⁷,R⁸ | K¹(Z)ⁿ⁺ |
|---|---|---|
| I-1 | R²=R⁵=R⁶=R⁷=R⁸=H,R⁴=OH,R¹=R³=I-a, Formula[I-a]:X=NH,R¹¹=NO₂,R⁹=SO₃H or SO₃⁻ R¹⁰=R¹²=R¹³=H | Rosin ammonium |
| I-2 | R²=R³=R⁵=R⁶=R⁷=R⁸=H,R⁴=OH,R¹=I-a, Formula[I-a]:X=NH,R¹¹=CH₃,R⁹=SO₃,R¹⁰=R¹²=R¹³=H | H₃N⁺(CH₂)₆NH₂ |
| I-3 | R²=R³=R⁵=R⁶=R⁷=R⁸=H,R¹=I-a,R⁴=Y-W, Formula[I-a]:X=NH,R¹¹=CH₃,R⁹=SO₃⁻,R¹⁰=R¹²=R¹³=H Y-W:Y=NH,W=CH₃ | C₁₂H₂₅N⁺H₃ |
| I-4 | R²=R³=R⁵=R⁶=R⁷=R⁸=H,R¹=R⁴=I-a, Formula [I-a]:X=NH,R¹¹=CH₃,R⁹=SO₃H or SO₃⁻ ,R¹⁰=R¹²=R¹³=H | (C₄H₉)₄N⁺ |
| I-5 | R²=R³=R⁵=R⁶=R⁷=R⁸=H,R¹=R⁴=I-a, Formula [I-a]:X=NH,R⁹=R¹¹=R¹³=CH₃,R¹²=SO₃H or SO₃⁻ ,R¹⁰=H | H₃N⁺(CH₂)₆NH₂ |
| I-6 | R²=R³=R⁵=R⁶=R⁷=R⁸=H,R¹=R⁴=I-a, Formula [I-a]:X=NH,R¹¹=CH₃,R⁹=SO₃⁻,R¹⁰=R¹²=R¹³=H | (N⁺H₃)₂CNH |
| I-7 | R²=R³=R⁵=R⁶=R⁷=R⁸=H,R¹=R⁴=I-a, Formula [I-a]: X=NH,R¹¹C₄H₉,R⁹=SO₃H or SO₃⁻ ,R¹⁰=R¹²=R¹³=H | H₃N⁺(CH₂)₆NH₂ |
| I-8 | R²=R³=R⁵=R⁷=R⁸=H,R¹=R⁴=I-a,R⁶=Y-W, Formula[I-a]:X=NH,R¹¹=CH₃,R⁹=SO₃H or SO₃⁻ ,R¹⁰=R¹²=R¹³=H Y-W:Y=S,W=methylphenyl | H₃N⁺(CH₂)₄NH₂ |
| I-9 | R²=R³=R⁵=R⁶=R⁷=R=H,R¹=R⁴=I-a, Formula [I-a]:X=NH,R¹¹=C₄H₉,R⁹=SO₃⁻,R¹⁰=R¹²=R¹³=H | 2(H₃N⁺(CH₂)₆NH₂) |
| I-10 | R²=R⁵=R⁶=R⁷=R⁸=H,R³=SO₃⁻,R⁴=NH₂R¹=I-a, Formula[I-a]:X=NH,R¹¹=N(C₃H₇)COCH₃,R⁹=R¹⁰=R¹²=R¹³=H | N-trimethyl-N-benzyl Ammonium |
| I-11 | R²=R⁵=R⁷=R⁸=H,R³=R⁶=SO₃⁻,R⁴=NH₂,R¹=I-a, Formula[I-a]:X=NH,R¹¹=NHCOCH₃,R⁹=R¹⁰=R¹²=R¹³=H | 2(CH₃)₄N⁺ |
| I-12 | R²R³=R⁵=R⁶=R⁷=R⁸=H,R¹=R⁴=I-a, Formula[I-a]:X=NH,R⁹=R¹¹=R¹³=CH₃,R¹²=SO₃H or SO₃⁻ R¹⁰=H | Diphenylguanidine ammonium |
| I-13 | R²=R³=R⁵=R⁶=R⁷=R⁸=H,R¹=R⁴=I-a, Formula[I-a]:X=NH,R¹¹=CH₃R⁹=SO₃H or SO₃⁻ R¹⁰=R¹²=R¹³=H | Bis(p-methylphenyl) guanidine ammonium |
| I-I4 | R²=R³=R⁴=R⁵=R⁶=R⁷=H,R¹=R⁸=I-a, Formula[I-a]:X=NH,R¹¹=CH₃,R⁹=SO₃H or SO₃⁻ R¹⁰=R¹²=R¹³=H | C₁₂H₂₅N⁺H₃ |
| I-15 | R⁵=R⁶=R⁷=R⁸=H,R¹=R⁴=NH₂,R²=R³=I-a, Formula[I-a]X=O,R"=CH₃,R⁹=SO₃H or SO₃⁻ ,R¹⁰=R¹²=R¹³=H | (CH₃)₄N⁺ |

| | | |
|---|---|---|
| Pro.Ex.No.=Product Example Number | | |

**Table1-2**

| Pro. Ex. No. | R¹,R²,R³,R⁴,R⁵,R⁶,R⁷,R⁸ | K¹(Z)ⁿ⁺ |
|---|---|---|
| I-16 | R⁵=R⁶=R⁷=R⁸=H,R¹=R⁴=NH₂,R²=R³=I-a, Formula[I-a]:X=O,R¹¹=SO₃H or SO₃,R⁹=R¹⁰=R¹²=R¹³=H | H₃N⁺(CH₂)₆NH₂ |
| I-17 | R³=R⁶=R⁷=R⁸=H,R²=CH₃,R⁴=NH₂,R³=SO₃H or SO₃⁻,R¹=I-a, Formula [I-a]:X=NH,R¹¹=CH₃,R⁹=SO₃H or SO₃ ,R¹⁰=R¹²=R¹³=H | C₄H₉N⁺H₃ |
| I-18 | R³=R⁶=R⁷=R⁸=H,R²=Br,R⁴=NH₂,R⁵=SO₃H or SO₃⁻,R¹=I-a, Formula [I-a]:X=NH,R¹¹=CH₃,R⁹=SO₃H or SO₃ ,R¹⁰=R¹²=R¹³=H | H₃N⁺(CH₂)₄NH₂ |
| I-19 | R²=R⁶=R⁷=R⁸=H,R³-OC₁₂H₂₅,R⁴=NH₂,R⁵=SO₃H or SO₃⁻ ,R¹=I-a, Formula[I-a]:X=NH,R¹¹=SO₃H or SO₃⁻,R⁹=R¹⁰=R¹¹=R¹³=H | C₂H₅OC₃H₆N⁺H₃ |
| I-20 | R²=R³=R⁶=R⁷=H,R⁴=R⁸=OH,R¹=R⁵=I-a, Formula[I-a]:X=NH,R¹¹CH₃,R⁹=SO₃H or SO₃⁻ R¹⁰=R¹²=R¹³=H | (C₈H₁₇)₄N⁺ |
| I-21 | R²=R³=R⁵=R⁶=R⁷R⁸=H,R¹=R⁴=I-a, Formula[I-a]:X=NH,R⁹=R¹¹=R¹³=CH₃,R¹²=SO₃⁻,R¹⁰=H | 2(H₃N⁺(CH₂)₆NH₂) |
| I-22 | R²=R⁵=R⁶=R⁷=R⁸=H,R³=SO₃⁻,R⁴=NH₂,R¹=I-a, Formula[I-a]:X=NH,R¹¹=NHCOCH₃,R⁹=R¹⁰=R¹²=R¹³=H | C₄H₉N⁺H₃ |
| I-23 | R²:R³=R⁵=R⁶=R⁷=R⁸=H,R¹=R⁴=I-a, Formula[I-a]:X=NH,R¹¹=CH₃,R⁹=SO₃H or SO₃⁻ R¹⁰=R¹²=R¹³=H | H₃N⁺(CH₂)₆NH₂ |
| I-24 | R²=R³=R⁴=R⁵=R⁶=R⁷=H,R¹=R⁸=I·a, Formula[I,a]:X=NH,R¹¹=CH₃,R⁹=SO₃H or SO₃⁻ R¹⁰=R¹²=R¹³=H | C₂H₅OC₃H₆N⁺H₃ |
| I-25 | R²=R⁵=R⁶=R⁷=R⁸=H,R³=SO₃⁻,R⁴=NH,R¹=I.a Formula[I-a]:X=NH,R¹¹=NHCOCH₃,R⁹=R¹⁰=R¹²=R¹³=H | H₃N⁺(CH₂)₆NH₂ |
| I-26 | R²=R⁵=R⁶=R⁷=R⁸=H,R³=SO₃⁻,R⁴=NH₂R¹=I-a, Formula[I-a]:X=NH,R¹¹=N(CH₃)COCH₃,=R⁹=R¹⁰=R¹²=R¹³=H | Cyclohexyl ammonium |
| I-27 | R²=R³=R⁵=R⁶=R⁷=R⁸=H,R¹=R⁴=I-a, Formula[I-a]:X=NH,R⁹=R¹¹=R¹³=CH₃,R¹²=SO₃H or SO₃⁻ R¹⁰=H | C₂H₅OC₃H₆N⁺H₃ |
| I-28 | R²=R³=R⁵=R⁶=R⁷=R⁸=H,R⁴=OH,R¹=I-a, Formula[I-a]:X=NH,R¹¹=CH₃,R⁹=SO₃,R¹⁰=R¹²=R¹³=H | H₃N⁺(CH₂)₆NH₂ |
| I-29 | R²=R⁵=R⁶=R⁷=R⁸=H,R³=SO₃,R⁴=NH₂,R¹=I-a, Formula[I-a]:X=NH,R¹¹=N(CH₃)COCH₃,R⁹=R¹⁰=R¹²=R¹³=H | N-trimethyl-N-benzyl Ammonium |
| I-30 | R³=R⁵=R⁶=R⁷=R⁸=H,R¹=R⁴=OH,R²=I-a, Formula[I-a]:X=NH,R⁹=CH₃,R¹¹=SO₃⁻,R¹⁰=R¹²=R¹³)=H | N-tributyl-N-benzyl ammonium |
| I-31 | R⁵=R⁶=R⁷=R⁸=H,R¹=R⁴=NH₂,R³=SO₃⁻,R²=I-a, Formula[I-a]:X=O,R⁹=R¹⁰=R¹¹=R¹²=R¹³=H | C₄H₉N⁺H₃ |
| I-32 | R³=R⁶=R⁷=R⁸=H,R⁴=NH₂,R²=R⁵=SO₃H or SO₃⁻,R¹=I-a, Formula[I-a]:X=NH,R¹¹=C₁₂H₂₅,R⁹=R¹⁰=R¹²=R¹³=H | Benzylurea ammonium |
| I-33 | R²=R⁵=R⁶=R⁷=R⁸=H,R³=SO₃⁻,R⁴=NH₂,R¹=I-a, Formula[I-a]:X=NH,R¹⁰=COOC₂H₅,R⁹=R¹¹=R¹²=R¹³=H | H₃N⁺(CH₂)₆NH₂ |

| | | |
|---|---|---|
| Pro.Ex.No.=product Example Number | | |

Examples of anthraquinone acid dyes which are useful in preparation of the dye salts of formula [II] used as colorant comprised in the compositions ofthe invention are given in Table 2 below.

**Table2**

| Pro. Ex. No. | J | R⁴⁷ | R⁴⁸ | R⁴⁹ | R⁵⁰ | R⁵¹ | R⁵² | K⁴(F)ⁿ⁺ |
|---|---|---|---|---|---|---|---|---|
| II-1 | Formula[II-a] | SO₃⁻ | NH₂ | H | SO₃⁻ | NH₂ | H | 2(H₃N⁺(CH₂)₆NH₂) |
| II-2 | fomula[II-a] | SO₃⁻ | NH₂ | H | SO₃H | NH₂ | H | H₃N⁺(CH₂)₆NH₂ |
| II-3 | formula[II-a] | SO₃⁻ | OH | H | SO₃H | OH | H , | C₁₂H₂₅N⁺H₃ |
| II-4 | Formula[II-b], R⁵³=R⁵⁴=H | SO₃⁻ | NH₂ | H | NH₂ | Cl | H | C₂H₅OC₃H₆N⁺H₃ |
| II-5 | formula[II-b], R⁵³=R⁵⁴=CH₃ | SO₃⁻ | NH₂ | H | SO₃H | NH₂ | H | Bis(p-methylphenyl) guanidine ammonium |
| II-6 | formula[II-b], R⁵³=R⁵⁴=CH₃ | SO₃⁻ | NH₂ | H | SO₃⁻ | NH₂ | H | H₃N⁺(CH₂)₄N⁺H₃ |
| II-7 | formula[II-b], R⁵³=R⁵⁴=H | SO₃⁻ | NH₂ | H | SO₃H | NH₂ | H | Rosin ammonium |
| II-8 | formula[II-b] , R⁵³=R⁵⁴=H | SO₃⁻ | NH₂ | H | SO₃H | NH₂ | H | H₃N⁺(CH₂)₆NH₂ |
| II-9 | formula[II-b], R⁵³=H, R⁵⁴=phenyl | SO₃⁻ | OH | OCH₃ | SO₃H | OH | OCH₃ | (C₄H₉)₄N⁺ |
| II-10 | formula [II-b], R⁵³=R⁵⁴=H | SO₃⁻ | C₃H₉ | C₃H₉ | SO₃H | H | H | N-tributyl-N-benzyl Ammonium |

| | | | | | | | | |
|---|---|---|---|---|---|---|---|---|
| Pro.Ex.No.=Product Example Number | | | | | | | | |

A particularly preferred amine is hexamethylendiamine in polyamide, due to their structural similarities. Therefore, formula [I] or formula [II] reacted by hexamethylendiamine have good solubility and disperse in polyamide.

Examples of the black dyes containing a mixture of two dye salts of formula [I], or a mixture of the dye salt of formula [I] and the dye salt of formula [II] are below:

### EXAMPLE 1-black dye

The anthraquinone dye salts of formula [I-21]: the anthraquinone dye salts of formula [I-23]: in a weight ratio of 4: 5.

### EXAMPLE 2 -black dye

The anthraquinone dye salt of formula [I-7]: anthraquinone dye salt of formula [II-8]: in a weight ratio of 1: 1.

Various perinone dyes can be mixed with the above-mentioned dye salt of formula [I] or formula [II] for use as a black colorant in the composition of the invention. These are known products of formula [III] below.
Formula [III]:

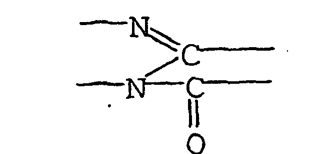

The perinone dyes which are mixed with the anthraquinone to produce a black dye may be used alone or in combination thereof.

Preferred perinone dyes used in the composition of the invention when solubility and / or dispersion in the resin are considered, are those of formula [IV], formula [IV] : 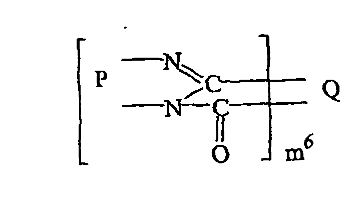 wherein P and Q, which may be the same or different, are independently constituent units represented by the following formulas [IV-a] to [IV-c]; and R¹⁴ to R²⁹, which may be the same or different, are independently an atom or a group selected from the group consisting of H, halogen atom such as Cl, Br, alkyl group having 1 to 18 carbon atoms, alkoxy group having 1 to 18 carbon atoms, aralkyl group, aryl group; and m⁶ is the number 1 or 2.
formula [IV-a]:

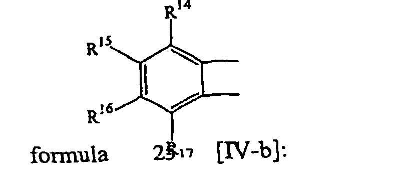

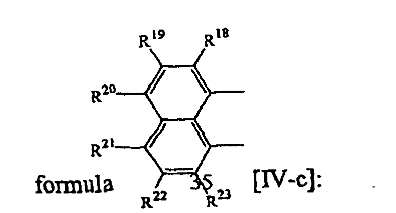

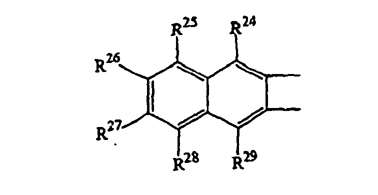

The above mentioned perinone dyes have practical heat resistance in molding and good transmittance in a main laser beam wavelength (800nm to 1200nm).

Dyes which belong to the class of perinone dyes listed in the color index are for example C.I.Solvent Orange 60, 78, C.I.Solvent Red 135, 162,178, 179, C.I.Solvent Violet 29, C.I.Pigment Orange 43, C.I.Pigment Red 149. If solubility and dispersibility in the resin are enhanced, solvent type dyes are preferred.

Examples of the perinone dyes of the formula [IV] are listed below in Table 3.

**Table 3**

| Pro. Ex. No. | P | Q |
|---|---|---|
| IV-1 | Formula[IV-b], R¹⁸=R¹⁹=R²⁰=R²¹=R²²=R²³=H | Formula[IV-a], R¹⁴=R¹⁵=R¹⁶=R¹⁷=H |
| IV-2 | Formula[IV-b], R¹⁸=R¹⁹=R²⁰=R²¹=R²²=R²³=H | Formula[IV-a], R¹⁴=R¹⁵=R¹⁶=R¹⁷=Cl |
| IV-3 | Formula[IV-b], R¹⁸=R¹⁹=R²⁰=R²¹=R²²=R²³=H | Formula[IV-c], R²⁴=R²⁵=R²⁶=R²⁷=R²⁸=R²⁹=H |
| IV-4 | Formula[IV-a], R¹⁴=R¹⁵=R¹⁶=R¹⁷=H | Formula[IV-b], R¹⁸=R¹⁹=R²⁰=R²¹=R²²=R²³=H |
| IV-5 | Formula[IV,b], R¹⁸=R¹⁹=R²⁰=R²¹=R²²=R²³=H | Formula[IV-c], R²⁴=R²⁶=R²⁷=R²⁸=R²⁹=H, R²⁵=OC₂H₅ |
| IV-6 | Formula[IV-b], R¹⁸=R¹⁹=R²⁰=R²¹=R²²R²³=H | Formula[IV-a], R¹⁴=R¹⁵= R¹⁷=H , R¹⁶=benzoyl |
| IV-7 | 2Formula[IV-b], R¹⁸=R¹⁹=R²⁰=R²²=R²³=H, R²¹=C₄H₉ | Formula(IV-a], R¹⁴=R¹⁷=H |
| IV-8 | Formula[IV-b], R¹⁸=R¹⁹=R²⁰=R²¹=R²²=R²³=H | Formula[IV-c], R²⁴=R²⁶=R²⁷=R²⁸=R²⁹=H ,R²⁵=phenyl |
| IV-9 | Formula[IV-b), R¹⁸=R¹⁹=R²⁰=R²¹=R²²=R²³=H | Formula[IV-a] R¹⁵=R¹⁶= R¹⁷=H , R¹⁴=Br |
| IV-10 | Formula[IV-b], R¹⁸=R¹⁹=R²⁰=R²¹=R²²=R²³=H | Formula[IV-a], R¹⁵=R¹⁶=R¹⁷=H,R¹⁴=COOH |

| | | |
|---|---|---|
| Pro.Ex.No.=Product Example Number | | |

Examples of the black dyes containing a mixture of the dye salts of formula [I] or formula [II] and perinone dyes are described below:

### EXAMPLE 3―black dye

The anthraquinone dye salt of formula [I-11]: the anthraquinone dye salt of formula [I-3]: perinone red dye of the following formula [IV-3]: anthraquinone yellow dye of the following formula [a] in a weight ratio of 5: 4: 1:1.
Formula [a]

### EXAMPLE 4-black

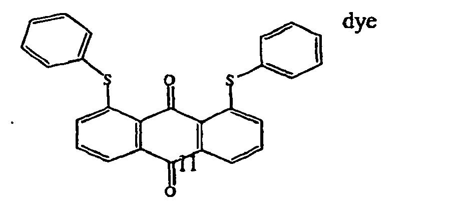

The anthraquinone dye salt of formula [I-11]: the anthraquinone dye salt of formula [I-7]: perinone orange dye of the following formula [IV-1]: anthraquinone yellow dye of the following formula [a] in a weight ratio of 5: 3: 1: 1.

### EXAMPLE 5 -black dye

The anthraquinone dye salt of formula [I-21]: perinone red dye of the following formula [IV-3]: anthraquinone yellow dye of the following formula [a] in a weight ratio of 6: 2: 1.

### EXAMPLE 6 ―black dye

The anthraquinone dye salt of formula [I-5]: perinone red dye of the following formula [IV-3]: perinone orange dye of the following formula [IV-1] in a weight ratio of 3: 2: 1.

### EXAMPLE 7 ―black dye

The anthraquinone dye salt of formula [I-6]: perinone red dye of the following formula [IV-3]: anthraquinone yellow dye of the following formula [a] in a weight ratio of 6: 2:1.

### EXAMPLE 8 ―black dye

The anthraquinone dye salt of formula [I-6]: perinone red dye of the following formula [IV-3]: perinone orange dye of the following formula [IV-1] in a weight ratio of 3: 2:1.

### EXAMPLE 9 -black dye

The anthraquinone dye salt of formula [I-21]: perinone red dye of the following formula[IV-3]: anthraquinone yellow dye of the following formula [b] in a weight ratio of 3: 2: 1.
Formula [b]:

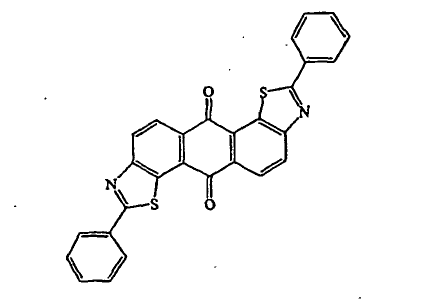

### EXAMPLE 10 ―black dye

The anthraquinone dye salt of formula [1-23]: perinone red dye of the following formula [IV-3] in a weight ratio of 2: 1.

### EXAMPLE 11 ―black dye

The anthraquinone dye salt of formula [I-21]: the anthraquinone dye salt of formula [I-23]: perinone red dye of the following formula [IV-3] in a weight ratio of3:1:1.

### EXAMPLE 12 ―blaclc dye

The anthraquinone dye salt of formula [1-9]: perinone red dye of the following formula [IV-2]: anthraquinone yellow dye of the following formula [b] in a weight ratio of 6: 2:1.

### EXAMPLE 13 ―black dye

The anthraquinone dye salt of formula [II-8]: perinone red dye of the following formula [IV-3]: anthraquinone yellow dye of the following formula [a] in a weight ratio of 6: 2: 1.

### EXAMPLE 14 ―black dye

The anthraquinone dye salt of formula [II-4]: perinone red dye of the following formula [TV-2]: anthraquinone yellow dye of the following formula [a] in a weight ratio of 6: 2:1.

### EXAMPLE 15 ―black dye

The anthraquinone dye salt of formula [II-10]: perinone red dye of the following formula [IV-3]: anthraquinone yellow dye of the following formula [a] in a weight ratio of 6: 2: 1.

### EXAMPLE 16 ―black dye

The anthraquinone dye salt of formula [II-2]: perinone red dye of the following formula [IV-3]: anthraquinone yellow dye of the following formula [b] in a weight ratio of 6: 2: 1.

### EXAMPLE 17 ―black dye

The anthraquinone dye salt of formula [I-5]: The anthraquinone dye salt of formula [II-8]: perinone red dye of the following formula [IV-3] in a weight ratio of 3: 3:1.

Dyes which belong to monoazo complex dyes can be mixed with the dye salts of formula [I] or formula [II] to produce a black dye for use as a colorant in the composition of the invention, and as represented by formula [V] below,
formula [V] : 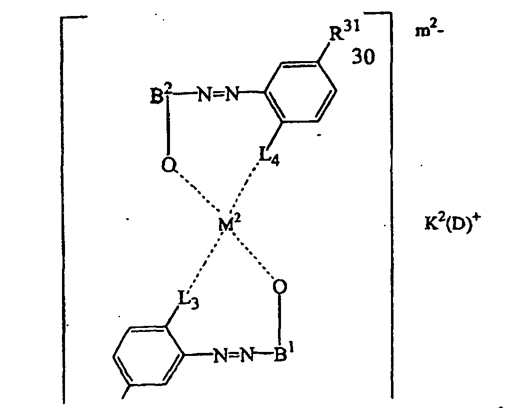 wherein R³⁰ and R³¹ , which may be the same of different, are Cl, SO₂R³², SO₂(-R³³)(-R³⁴), or H; wherein R³³ and R³⁴, which may be the same or different, are independently hydrogen atom, linear or branched Cl - C4 alkyl; R³² is linear or branched C1 - C4 alkyl; L₃ and L₄ are independently O or COO; (D)⁺is hydrogen ion, cation of alkali metals, ammonium ion, cations of organic amine including aliphatic primary, secondary and tertiary amines, quaternary ammonium ion; K² is an integer, m² is 0, 1 or 2; M² is selected from metals of ionic valency from 2 to 4 (such as Zn, Sr, Cr, Al, Ti, Fe, Zr, Ni, Mn, B[boron] and Co), preferably a trivalent metal such as Cu or trivalent metals such as Cr. Co. Ni, and Al.
B¹ and B² are represented by formula [V-a] or formula [V-b].
formula [V-a]: or 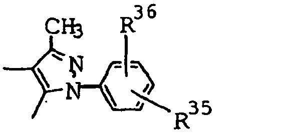 formula [V-b]: 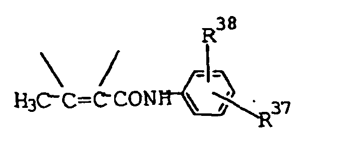 wherein R³⁵ and R³⁷, which may be the same of different, are Cl, SO₂R³², SO₂(-R³³)(-R³⁴), or H; R³³ and R³⁴, which may be the same or different, are independently hydrogen atom, linear or branched C1 - C4 alkyl; and R³⁶ and R³⁸, which may be the same or different, are independently hydrogen atom, linear or branched C1 - C18 alkyl, carboxyl, hydroxyl, C1 - C18 alkoxy, amino or halogen atoms.

Suitable cations for use in the above-mentioned monoazo complex dyes are H⁺; cations of alkali metal, ammonium ion, cations of organic amine (including aliphatic primary, secondary and tertiary amines), and quaternary ammonium ion.

Suitable amines for use in producing the above-mentioned monoazo dyes and common in dyestuffs include aliphatic amine, alicyclic amine, alkoxyalkyl amine, amine having alkanol, diamine, amine of guanidine derivatives, and aromatic amine.

Examples of the monoazo complex dyes of formula [V] , wherein B¹ and B² are of the formula [V-a] are show below at Formula [V-c] and together with the accompanying information in Table 4.
Formula [V-c]:

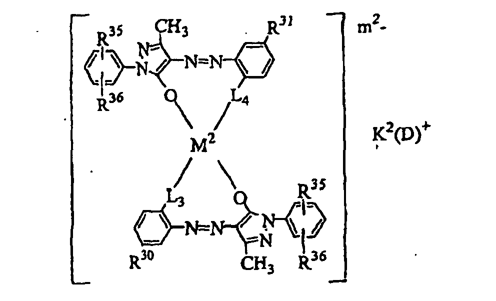

**Table4**

| Pro. Ex. No | R³⁰ | R³¹ | R³⁵ | R³⁶ | M² L₃ L₄ | | | m² | K²(D)⁺ |
|---|---|---|---|---|---|---|---|---|---|
| V-1 | H | H | H | H | Cr | COO | COO | l | H⁺ |
| V-2 | Cl | Cl | SO₂NH₂ | H | Cr | O | O | l | H⁺ |
| V-3 | SO₂NH₂ | SO₂NH₂ | SO₂NH₂ | H | Cr | O | O | l | H⁺ |
| V-4 | Cl | Cl | SO₂NH₂ | H | Co | O | O | l | H⁺ |
| V-5 | SO₂NH₂ | SO₂NH₂ | H | H | Ni | O | O | l | H⁺ |
| V-6 | H | H | SO₂NH₂ | H | Cu | COO | COO | l | H⁺ |
| V-7 | H | H | H | H | Cr | COO | COO | l | C₄H₉CH(C₂H₅)OC₃H₆N⁺H₃ |
| V-8 | Cl | Cl | SO₂NH₂ | H | Cu | O | O | l | C₁₂H₂₅N⁺H₂(CH₂CH₂O)₂H |
| V-9 | Cl | Cl | SO₂NH₂ | H | Cr | O | O | l | Na⁺ |
| V-10 | Cl | SO₂NH₂ | H | Cl | Co | O | O | l | H⁺ |

| | | | | | | | | | |
|---|---|---|---|---|---|---|---|---|---|
| Pro.Ex.No.=Product Example Number | | | | | | | | | |

Examples of the monoazo complex dyes of formula [V] , wherein B¹ and B² are of the formula [V-b] are shown below at Formula [V-d] and together with the accompanying information in Table 5.
Formula [V-d]:

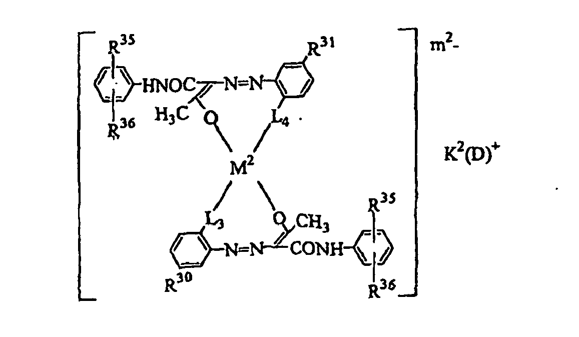

**Table 5**

| Pro. Ex. No. | R³⁰ | R³¹ | R³⁵ | R³⁶ | M² | L₃ | L₄ | m² | K²(D)⁺ |
|---|---|---|---|---|---|---|---|---|---|
| V-11 | SO₂ | SO₂NH₂ | H | H | Co | O | O | l | H⁺ |
| V-12 | H | H | SO₂NH₂ | H | Cr | COO | COO | l | H⁺ |
| V-13 | Cl | Cl | H | H | Co | O | O | l | C₄H₉CH(C₂H₅)OC₃H₆N⁺H₃ |
| V-14 | SO₂NH₂ | SO₂NH₂ | SO₂NH₂ | H | Cr | O | O | l | NH₄⁺ |
| V-15 | Cl | Cl | SO₂NH₂ | H | Co | COO | COO | l | H⁺ |

| | | | | | | | | | |
|---|---|---|---|---|---|---|---|---|---|
| Pro.Ex.No.=Product Example Number | | | | | | | | | |

Examples of the black dyes containing a mixture of the dye salts of formula [I] or formula [II] and at least one of the monoazo complex dyes of the following formula [V] are provided in detail below:

### EXAMPLE 18 -black dye

The anthraquinone dye salt of formula [II-2]: monoazo complex red dye of the following formula [V-2]: monoazo complex yellow dye of the following formula

### [V-14] in a weight ratio of 6: 2: 1.

### EXAMPLE 19 -black dye

The anthraquinone dye salt of formula [I-21]: monoazo complex red dye of the following formula [V-2]: monoazo complex orange dye of the following formula

### [V-3] in a weight ratio of 6: 2: 1.

### EXAMPLE 20 -black dye

The anthraquinone dye salt of formula [1-26]: monoazo complex red dye of the following formula [V-2]: monoazo complex orange dye of the following formula

### [V-3] in a weight ratio of 6: 2: 1.

### EXAMPLE 21 ―black dye

The anthraquinone dye salt of formula [I-7]: monoazo complex red dye of the following formula [V-2]: anthraquinone yellow dye of the following formula [a] in a weight ratio of 6: 2: 1.

### EXAMPLE 22 -black dye

The anthraquinone dye salt of formula [I-5]: monoazo complex red dye of the following formula [V-2]: anthraquinone yellow dye of the following formula [b] in a weight ratio of 6: 3: 1.

Dyes which belong to anthrapyridone dyes can be mixed with the dye salts of formula [I] or formula [II] to produce a black dye for use as colorant in the composition of the invention, and are represented by formula[VI] ,
Fomula [VI]: 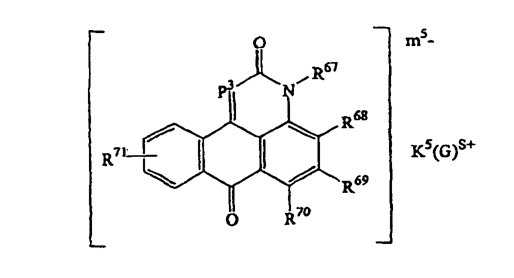 wherein R⁶⁷ to R⁷¹, which may be the same or different, are independently selected from the group consisting of H, alkyl, aryl, alkenyl, alkoxy, amino, hydroxy, halogen atom, acyl, acyloxy, acylamide, acyl-N-alkylamide, carboxyl, alkoxycarbonyl, cyclohexylamide, sulfonyl, or formula [VI-a], and at least one of R⁶⁷ to R⁷⁴ is of sulfonyl, wherein P³ may be the same or different, are independently selected from the group consisting of C-R⁷², N; R⁷² is H, alkyl, aryl, hydroxy, carboxyl, alkoxy, amino, benzoyl, benzyl wherein (G)^{s+} represents ammonium ion or a cation derived from an organic amine compounds or a basic dye wherein s is 1 or 2, m⁵ is an integer from 1 to 4 and K⁵ is the ratio of m⁵ s;
formula [VI-a]: 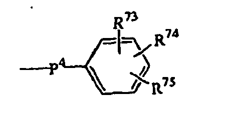 wherein P⁴ is O or NH, and R⁷³ to R⁷⁵, which may be the same or different, are independently selected from the group consisting of H, alkyl, aryl, alkenyl, alkoxy, amino, N-alkylamide, N-arylamide, hydroxy, halogen atom, acyl, acyloxy, acylamide, acyl-N-alkylamide, carboxyl, alkoxycarbonyl, or sulfonyl.

Suitable amines for use in producing the above-mentioned anthrapyridone dyes in dyestuffs include aliphatic amine, alicyclic amine, alkoxyalkyl amine, amine having alkanol, diamine, amine of guanidine derivatives, and aromatic amine.

These anthrapyridone dyes are considered having good solubility and/or dispersion in the resin.

Examples of the anthrapyridone dyes of formula [VI] appear in Table 6 below.

**Table6**

| Pro. Ex. No. | R⁶⁷,R⁶⁸,R⁶⁹,R⁷⁰,R⁷¹ | P³ | K⁵(G)^{Σ+} |
|---|---|---|---|
| VI-1 | R⁶⁸=R⁶⁹=R⁷¹=H,R⁶⁷=CH₃,R⁷⁰=VI-a, Formula VI-a:P⁴=NH,R⁷³=SO₃⁻,R⁷⁴=R⁷⁵=H | CH | H₃N⁺(CH₂)₆NH₂ |
| VI-2. | R⁶⁸=R⁶⁹=R⁷¹=H,R⁶⁷=CH₃,R⁷⁰=VI-a, Formula VI-:P⁴=NH,R⁷³=SO₃⁻=R⁷⁴=R⁷⁵=H | CH | (CH₃)₃N⁺C₁₂H₂₅ |
| VI-3 | R⁶⁸=R⁶⁹=R⁷¹=CH₃,R⁷⁰=VI-a, Formula VI-a:P⁴=NH,R⁷³=SO₃⁻, R⁷⁴=R⁷⁵=H | CH | C₂H₅OC₃H₆N⁺H₃ |
| VI-4 | R⁶⁸=R⁶⁹=R⁷¹=H,R⁶⁷=CH₃,R⁷⁰=VI-a, Formula VI-a:P⁴NH,R⁷³=SO₃⁻,R⁷⁴=CH₃,R⁷⁵=H | CH | C₄H₉N⁺H₃ |
| VI-5 | R⁶⁸=R⁶⁹=H,R⁶⁷=CH₃,R⁷⁰=VI-a, Formula VI-a:P⁴=NH,R⁷³=SO₃⁻,R⁷⁴=CH₃,R⁷⁵=H | CH | N-trimethyl-N-benzyl Anmmonium |
| VI-6 | R⁶⁸=R⁶⁹=R⁷¹=H,R⁶⁷=CH₃,R⁷⁰=VI-a, Formula VI-a:P⁴=NH,R⁷³=R⁷⁴=SO₃⁻,R⁷⁵=H | CH | 2(CH₃)₄N⁺ |
| VI-7 | R⁶⁸=R⁶⁹=R⁷¹=H,R⁶⁷=CH₃,R⁷⁰=VI-a, Formula VI-a:P⁴=NH,R⁷³=SO₃⁻,R⁷⁴=C₄H₉,R⁷⁵=H | CH | C₁₂H₂₅N⁺H₂(CH₂CH₂O)₂H |
| VI-8 | R⁶⁸=R⁶⁹=R⁷¹=H,R⁶⁷=CH₃,R⁷⁰=VI-a, Formula VI-a:P⁴=NH,R⁷³=SO₃⁻,R⁷⁴=Cl,R⁷⁵=H | CH | N-trimethyl-N-benzyl Anmmonium |
| VI-9 | R⁶⁸=R⁶⁹=R⁷¹=H,R⁶⁷=CH₃,R⁷⁰=VI-a, Formula VI-a:P⁴=NH,R⁷³=SO₃⁻,R⁷⁴=CH₃,R⁷⁵=H | N | C₂H₅OC₃H₆N⁺H₃ |
| VI-10 | R⁶⁸=R⁶⁹=R⁷¹=H,R⁶⁷=CH₃,R⁷⁰=VI-a, Formula VI-a:P⁴=NH,R⁷³=SO₃⁻,R⁷⁴=C₈H₁₇,R⁷⁵=H | N | C₁₂H₂₅N⁺H₃ |
| VI-11 | R⁶⁸=R⁶⁹=R⁷¹=H,R⁶⁷=H,R⁷⁰=VI-a, Formula VI-a:P⁴=NH,R⁷³=SO₃, R⁷⁴=R⁷⁵=CH₃ | C₄H₉ | Bis(p-methylphenyl) guanidine anmmonium |
| VI-12 | R⁶⁷=R⁶⁹=R⁷¹=H,R⁶⁸=VI-a-1,R⁷⁶=VI-a-2, formula VI-a-1:P⁴=O,R⁷³=SO₃⁻;R⁷⁴=C₁₃H₂₇R⁷⁵=H formula VI-a-2:P⁴=NH,R⁷³=SO₃⁻, R⁷⁴=R⁷⁵=CH₃ | C-benzoyl | (CH₃)₃N⁺C₁₂H₂₅ |
| VI-13 | R⁶⁷=R⁶⁹=R⁷¹=H,R⁶⁸=VI-a-1,R⁷⁰=VI-a-2, Formula VI-a-1:P⁴=O,R⁷³=SO₃⁻,R⁷⁴=CH₃,R⁷⁵=H formula VI-a-2:P⁴=NH,R⁷³=SO₃⁻ ,R⁷⁴=R⁷⁵=CH₃ | C-benzoyl | N-trimethyl-N-benzyl anmmonium |
| VI-14 | R⁶⁸=R⁶⁹=R⁷¹=H,R⁶⁷=CH₃,R⁷⁰=VI-a, Formula VI-a:P⁴=O,R⁷³=SO₃⁻ ,R⁷⁴=R⁷⁵=H | C-benzoyl | (C₄H₉)₄N⁺ |
| VI-15 | R⁶⁸=R⁶⁹=R⁷¹=H,R⁶⁷=CH₃, R⁷⁰=VI-a, Formula VI-a:P⁴=NH,R³=SO₃⁻,R⁷⁴=R⁷⁵=H | CH | N-trimethyl-N-benzyl anmmonium |
| VI-16 | R⁶⁸=R⁶⁹=R⁷¹=H,R⁶⁷=CH₃, R⁷⁶=VI-a, Formula VI-a:P⁴=NH,R⁷³-SO₃⁻, R⁷⁴=CH₃,R⁷⁵=H | CH | H₃N⁺(CH₂)₆NH₂ |
| VI-17 | R⁶⁸=R⁶⁹=R⁷¹=H,R⁶⁷=CH₃, R⁷⁰=VI-a, Formula vi-a:P⁴=NH,R⁷³=SO₃⁻,R⁷⁴=C₈H₁₇,R⁷⁵=H | N | Diphenylguanidine anmmonium |

| | | | |
|---|---|---|---|
| Pro.Ex.No.=Product Example Number | | | |

Examples of the black dyes containing a mixture of the dye salts of formula [I] or formula [II] and at least one of the anthrapyridone dye of the following formula[VI] are described below:

### EXAMPLE 23 ―black dye

The anthraquinone dye salt of formula [I-5]: anthrapyridone red dye of the following formula [VI-2]: monoazo complex yellow dye of the following formula

### [V-14] in a weight ratio of 6: 2: 1.

### EXAMPLE 24 ―black dye

The anthraquinone dye salt of formula [I-6]: anthrapyridone red dye of the following formula [VI-1] in a weight ratio of 2:1.

### EXAMPLE 25 ―black dye

The anthraquinone dye salt of formula [I-7]: anthrapyridone red dye of the following formula [VI-18] in a weight ratio of 2: 1.

### EXAMPLE 26 ―black dye

The anthraquinone dye salt of formula [I-5]: anthrapyridone red dye of the following formula [VI-9]: anthraquinone yellow dye of the following formula [b] in a weight ratio of 6: 2: 1.

### EXAMPLE 27 ―black dye

The anthraquinone dye salt of formula [I-5]: anthrapyridone red dye of the following formula (VI-9) in a weight ratio of 3: 1.

### EXAMPLE 28 ―black dye

The anthraquinone dye salt of formula [I-4]: the anthraquinone dye salt of formula (I-11]: anthrapyridone red dye of the following formula [VI-2] in a weight ratio of 5: 5: 1.

### EXAMPLE 29 ―black dye

The anthraquinone dye salt of formula [I-29] : anthrapyridone red dye of the following formula (VI-15] in a weight ratio of 4: 1.

### EXAMPLE 30 ―black dye

The anthraquinone dye salt of formula [I-3]: anthrapyridone red dye of the following formula [VI-4]: anthraquinone yellow dye of the following formula [a] in a weight ratio of 5: 2: 1.

Beside ever mentioned examples of the black dyes, by following mixture there can produce a black dye.

### EXAMPLE 31―black dye

The anthraquinone dye salt of formula [I-2]: anthraquinone yellow dye of the following formula [a] in a weight ratio of 6:1

The thermoplastic resins for use in the inventive compositions include polyamides, polyesters, and the like as are commonly used in making a molded product. As the examples of the polyamide resins utilized in the present invention, condensation products of dicarboxylic acids and diamines, condensation products of aminocarboxylic acids-and ring-opening polymerization products of cyclic Iactams can be cited. As examples of dicarboxylic acids, adipic acid, azelaic acid, sebacic acid, dodecanedioic acid, isophthalic acid and terephthalic acid can be cited. As examples of diamines, tetramethylene diamine, hexamethylene diamine, octamethylene diamine, nonamethylene diamine, dodecamethylene diamine, 2-methylpentamethylene diamine; 2-methyloctamethylene diamine, trimethylhexamethylene diamine, bis(p-aminocyclohexyl)methane, m-xylene diamine and p-xylene diamine may be cited. As the example of aminocarboxylic acid, 11-aminodoiiecanoic acid can be cited. As the examples of cyclic lactam, caprolactam and laurolactam can be cited. As the specific examples of condensation products and ring-opening polymerization products, aliphatic polyamides such as nylon 6, nylon 66, nylon 46, nylon 610, nylon 612, nylon 11, nylon 12, semi-aromatic polyamides such as polymetaxylene adipamide (nylon MXD6), polyhexamethylene terephthalamide (nylon 6T), polyhexamethylene isophthalamide (nylon 6I) and polynonamethylene terephthalamide nylon 9T), and copolymers and mixtures of these polymers can be cited. As the examples of the copolymers, nylon 6/66, nylon 66/6I, nylon 6I/6T and nylon 66/6T can be cited.

A wide range of common polyester molding compositions useful for blending with colorants in the practice of the present invention are known in the art. These include polymers which are, in general, condensation products of dicarboxylic acids and diols. Dicarboxylic acids can be selected from the group consisting of adipic acid, azelaic acid, sebacic acid, dodecanedioic acid, terephthalic acid, isophthalic acid, naphthalenedicarboxylic acid and diphenyl dicarboxylic acid, and diols can be selected from the group consisting of ethylene glycol, propylene glycol, butanediol, hexanediol, neopentyl glycol,. cyclohexanediol, and bisphenol A. Preferred polyesters include polyethylene terephtalate (PET), polypropylene terephthalate (3GT), polybutylene terephthalate (PBT), polyethylene 2,6- naphthalate (PEN), polycyclohexane dimethylene terephthalate (PCT) and copolymers and mixtures thereof. As the examples of the copolymers, some of dicarboxylic acids or some of diols can be added to the condensation products. Polyester polymers may be copolymerized a little amount of compnents like trimesic acid, trimellitic acid, pyromellitic acid, glycerol, and pentaerythritol which have more than 3 functional groups.
Additional other polymers such as polycarbonate can also be presented, provided that the essential characteristics of the composition of the present invention are not substantially altered.

The amine salt of anthraquinone dyes of formula [1] or formula [II] are present in an amount of from 0.01 to 1 % by weight, when the composition comprises polyamide 6 as at least the major component of the polyamide resin composition. The amount of the amine salt of anthraquinone dyes of formula [I] or formula[II] may be specialized for applications requiring different properties associated with the laser welding.

The composition of the present invention may contain an inorganic filler or reinforcing agent that includes, for example, fibrous reinforcement such as glass fiber and carbon fiber, glass flakes, glass beads, talc, kaolin, wollastonite, silica, calcium carbonate, potassium titanate and mica. Glass fiber and flakes are preferred selections. Glass fibers suitable for use in the present invention are those generally used as a reinforcing agents for thermoplastic resins and thermosetting resins. The preferred amount of glass fiber in the resin composition of the present invention is from about 5 to about 120 parts by weight, with respect to 100 parts by weight of the thermoplastic resin. If it is under 5 weight percent, it would be difficult to give sufficient reinforcement from the glass fiber, and if it is over 120 weight percent, it would have poor processibility and poor transparency to laser. It is preferable. at about 5 to about 100 weight percent, and particularly preferable at about 15 to about 85 weight percent.

One or more optional compounds selected from a wide variety of compounds tailored for different applications of the resin compositions can be included in the compositions according to the present invention, as is understood among those having skill in the art.

Typically, additive compounds can include flame retardants, impact modifiers, viscosity modifiers, heat resistance improvers, lubricants, antioxidants and UV-and other stabilizers. The polyamide resin compositions of the present invention may have such additive compounds in suitable amounts so as not to harm characteristic properties of the compositions.

In the present invention, thermoplastic resin compositions are provided that are suitable for laser welding, including transparent articles for laser beam transmission to achieve welding together with the opaque article for laser beam absorption. Suitable opaque articles and their compositions are described for example in DE-A-4432081.

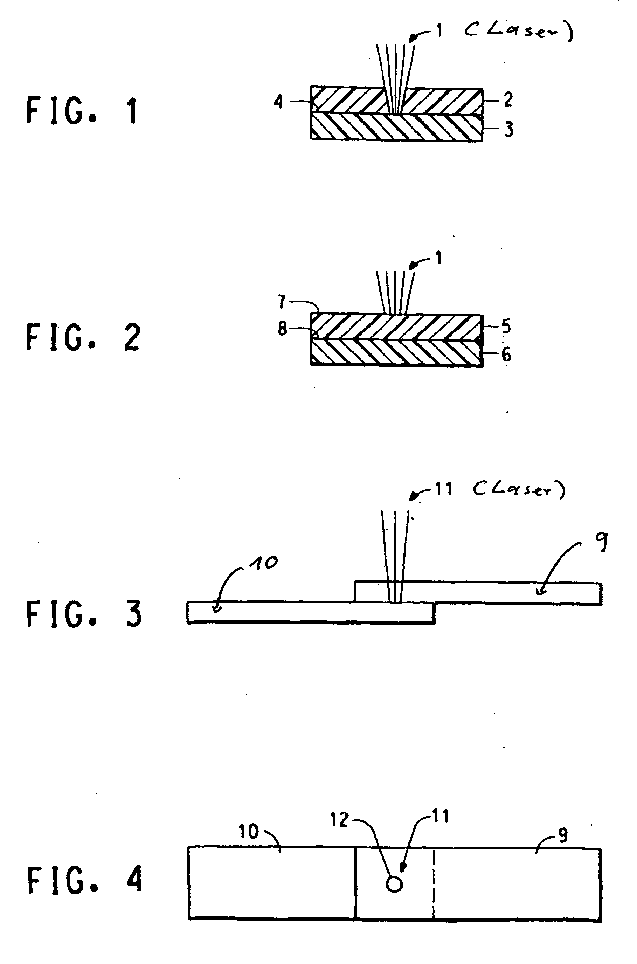

Figure 1 is an illustration of a conventional laser welding arrangement. A laser beam 1 is transmitted through the first article 2 to the second article 3 containing laser beam absorbing combination, and the surface 4 of the second article 3 that have absorbed the laser energy 1 is melted and pressed with the surface of the first article 2 to weld them together. As shown in Fig. 2, first article 5 and second article 6 join at surface 8. The laser beam 1 is applied to the surface 7 of first article 5. Two thermoplastic components must have different transmission and absorption coefficients and it is difficutt to weld two articles having the same color.

### EXAMPLES

The present invention is illustrated by the following examples and comparative examples, but it should be construed that the invention is in no way limited to those examples. These examples are in part directed to the practical laser weldability of a combination of laser transmitting articles formed from the compositions of the Examples with laser absorbing articles formed by other compositions. Illustrations include nylon 6 (see Table 10 and 13), 66 (see Table 14) and polyester (see Table 15). Other properties necessary for use in molding articles being subject to laser welding, including laser transmission capability, are shown in other tables.
For instance, Examples A; B, C, J, K, M and Comparative Examples D, E, F, L,N are directed to the transmittance of the article.

### Example A

400 grams of Nylon 6 ZYTEL pellets (available. from E.L DuPont de Nemours and Co., under the products name ZYTEL® 7301) were dried under vacuum at 120°C, for more than 8 hours, then mixed with a mixture of amine salt of anthraquinone dye of formula [I-21] (0.53 g) with perinone red dye represented by the formula [IV-3] (0.18 g) and anthraquinone yellow dye represented by the formula [a] (0.09 g) in a stainless tumble mixer with stirring for one hour. The mixture was then injection molded to form the injection molded test specimens (whose sizes are 48 mm x 86mm x 3 mm) using K50-C produced by Kawaguchi Steel KK. and the cylinder temperature was set to 250°C. Mold temperature was 60°C. Good and uniformly black appearance and surface gloss without color shading of the specimens were observed.

### Example B

400 grams of Nylon 6 ZYTEL pellets (available from E.I. DuPont de Nemours and Co., under the product name ZYTEL® 7301) were dried under vacuum at 120°C, for more than 8 hours, then mixed with a mixture of amine salt of anthraquinone dye of fomula [I-21] (0.53 g) with monoazo complex red dye of the following formula [V-2] (0.18 g) and another monoazo complex orange dye of the following formula [V-3] (0.09 g) in a stainless tumble mixer with stirring for one hour. The mixture was then injection molded to form the injection molded test specimens (whose sizes are 48 mm x 86mm x 3 mm) using K50-C produced by Kawaguchi Steel K.K. and the cylinder temperature was set to 250°C. Mold temperature was 60°C. Good and uniformly black appearance and surface gloss without color shading of the specimens were observed.

### Example C

400 grams of Nylon 6 ZYTEL pellets (available from E.I. DuPont de Nemours and Co., under the product name ZYTEL® 7301) were dried under vacuum at 120°C, for more than 8 hours, then mixed with a mixture of amine salt of anthraquinone dye of formula [I-6] (0.53 g) with perinone red dye represented by the formula [IV-3] (0.18 g) and anthraquinone yellow dye represented by the formula [a] (0.09 g) in a stainless tumble mixer with stirring for one hour. The mixture was then injection molded to form the injection molded test specimens (whose sizes are 48 mm x 86mm x 3 mm) using K50-C produced by Kawaguchi Steel K.K. and the cylinder temperature was set to 250°C. Mold temperature was 60°C. Good and uniformly black appearance and surface gloss without color shading of the specimens were observed.

### Comparative Example D

400 grams of Nylon 6 ZYTEL pellets (available from E.I. DuPont de Nemours and Co., under the product name ZYTEL® 7301) were dried under vacuum at 120°C, for more than 8 hours, then mixed with a mixture of anthraquinone green dye of the following formula [c] (0.53 g) with perinone red dye represented by the formula [IV-3] (0.18 g) and anthraquinone yellow dye represented by the formula [a] (0.09 g) in a stainless tumble mixer with stirring for one hour. The mixture was then injection molded to form the injection molded test specimens (whose sizes are 48 mm x 86mm x 3 mm) using K50-C produced by Kawaguchi Steel K.K. and the cylinder temperature was set to 250°C. Mold temperature was 60°C. Good and uniformly black appearance and surface gloss without color shading of the specimens were observed.
Formula [c]:

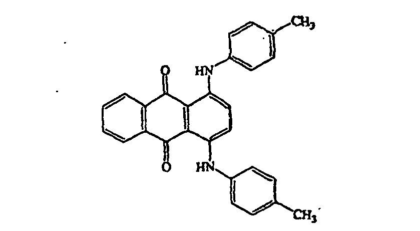

### Comparative Example E

400 grams of Nylon 6 ZYTEL pellets (available from E.I. DuPont de Nemours and Co., under the product name ZYTEL® 7301) were dried under vacuum at 120°C, for more than 8 hours, then mixed with a mixture of anthraquinone violet dye of the following formula [d] (0.53 g) with perinone red dye represented by the formula [IV-3] (0.18 g) and anthraquinone yellow dye represented by the formula [a] (0.09 g) in a stainless tumble mixer with stirring for one hour. The mixture was then injection molded to form the injection molded test specimens (whose sizes are 48 mm x 86mm x 3 mm) using K50-C produced by Kawaguchi Steel K.K. and the cylinder temperature was set to 250°C. Mold temperature was 60°C. Good and uniformly black appearance and surface gloss without color shading of the specimens were observed.
Formula [d]:

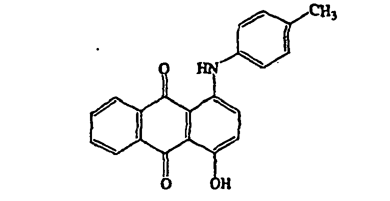

### Comparative Example F

400 grams of Nylon 6 ZYTEL. pellets (available from E.I. DuPont de Nemours and Co., under the product name ZYTEL® 7301) were dried under vacuum at 120°C, for more than 8 hours, then mixed with the monoazo complex black dye of the following formula [e] (0.80 g) in a stainless tumble mixer with stirring for one hour. The mixture was then injection molded to form the injection molded test specimens (whose sizes are 48 mm x 86mm x 3 mm) using K50-C produced by Kawaguchi Steel K.K. and the cylinder temperature was set to 250°C. Mold temperature was 60°C. Good and uniformly black appearance and surface gloss without color shading of the specimens were observed.
formula [e]:

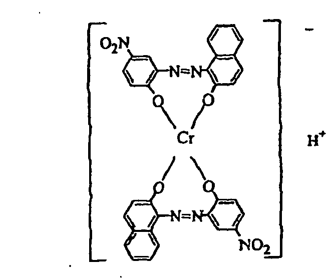

### Test Procedures

### (1) Transmission Properties

Transmittance (T) in the range of 400 nm to 1200 nm of the test plates with laser beams having respective wavelengths of 940 nm(Semiconductor laser) and 1064 nm (YAG laser) was measured using a U-3410 spectrometer producted by Hitachi with 60φ sphere photometer for wavelength from ultraviolet to near-infrared. The ratio (TA) of transmission with 940 nm : transmission with 1064 nm and the ratio (TB) of transmission with 940 nm : tarnsmission of natural resin are determined and compared between the examples.

### (2) Appearance and surface gloss

Appearance of the test plates were evaluated by measuring Reflection Density (OD) of the test plates by Refelection Density meter TR-927 produced by Macbeth. Test plates having higher OD values are judged to have better surface smoothness and rich in gloss.

### (3) Light Resistance

Each test plate was exposed to Xenon Weather Meter( produced by Toyo Seiki K.K., trade name: AtlasCI-4000) for 150 hours according to the following conditions. The amount of color fading and discoloration E between "before" and "after" light irradiation was determined and measured using a colorimeter (produced by Juki, trade name: JP 7000).

| Conditions of Light Resistance Test Procedure | |
|---|---|
| Radial illumination (W/m²)(E) | 60 |
| Black standard temperature(°C) | 83 |
| Rain test | N |
| Chamber temparture(°C) | 55 |
| Moisture(%) | 50 |

The test plate having greater ΔE are judged to have greater discoloring and fading.

### (4) Thermal Resistance

The amount of color fading and discoloration ΔE between "before" and "after" each test plate being placed and kept in an oven at 160°C for 15 days was determined and measured using a colorimeter (produced by Juki, trade name: JP. 7000).

### (5) Moisture Resistance

The amount of color fading and discoloration ΔE between "before" and "after" each test plate being placed and kept in a thermoregulator at 80°C(a humidity was 95%) for one week was determined and measured using a colorimeter (produced by Juki, trade name: JP 7000).

### (6) TG(Thermogravimetric alalyzers) / DTA (Differential thermal analyzers)

TG and DTA of each test colorant powder were measured using TG / DTA analyzers (prodcued by Seiko Instrument, trade name:SII EXSTAR 6000) in a heating furnace that air is introduced into at 200 ml / min, of which temperature is raised from 30 to 55° C at 10 °C/min then when reached to at 550 °C for 28 minutes.

### (7) Solubility Resistance in organic solvents

The amount of color fading and discoloration ΔE between before and after each test plate being immersed in ethyleneglycole and made airtight, then kept in thermoregulator at 40°C for 48 hours was determined and measured using a colorimeter (produced by Juki, tradename: JP7000).

The test plate having greater E are judged to have greater discoloring and fading.

The results are set forth in the following Table 7.

**Table 7**

| | | Example A | Example B | Example C | Comparative Example D | Comparative Example E | Comparative Example F |
|---|---|---|---|---|---|---|---|
| Transmission | TA | 0.96 | 0.95 | 0.95 | 0.98 | 0.83 | 0.72 |
| | TB | 1.00 | 1.02 | 1.02 | 0.98 | 0.78 | 0.71 |
| OD | | 2.47 | 2.49 | 2.45 | 2.51 | 2.49 | 2.43 |
| Light Resistance ΔE | | 1.12 | 0.98 | 1.18 | 1.08 | 1.05 | 0.89 |
| Thermal Resistance ΔE | | 0.61 | 0.64 | 0.62 | 1.29 | 1.12 | 0.35 |
| Solubility Resistance ΔE | Test Plate | 0.34 | 0.47 | 0.40 | 0.93 | 0.81 | 0.28 |
| | Solvents | 0.61 | 0.08 | 0.65 | 1.59 | 1.06 | 0.32 |
| Moisture Resistance ΔE | | 0.16 | 0.17 | 0.09 | 1.53 | 0.71 | 0.24 |
| TG/DTA | | | | | | | |
| Exothermic peak (°C) | | 346.5, | 346.9/ | 315.1/ | 378.6/ | none/ | none/ |
| | | 506.2 | | | | | |
| Endothermic peak (°C) | | /none | none | none | 181.1 | 193.7 | 293.7 |

This testing demonstrates that Examples A - C showed as high transmittance as a natural color resin at a main wavelength in infra-red region (800 nm to 1200 nm), compared with Comparative Example F containing monoazo complex dye. The appearance, surface gloss and light resiatnce showed no deterioration in Examples A - C. In Examples A - C, no discoloring and fading after being exposured to heating was shown and thermal, solubility and moisture resistances were much better than Comparative Example D and E containing a neutral anthraquinone. No endothermic peak in test colorant powder Examples A - C was in the range of 200 °C to 300 °C and there is no adverse effect on thermoplastic resin due to addition of colorants during molding thereof.

### (8) Blooming Resistance

The molded plates obtained as Example A and Comparative Example D were placed in an oven set at 60 deg. C with 95% relative humidity for 1 week. Then the plates were wiped with white cotton cloth and color change of the cotton appearance was visually examined: The results are shown in Table 8.

**Table 8**

| | Example A | Comparative Example D |
|---|---|---|
| Cotton Appearance | No change | Colored to deep green |

### Example G

14 kg of Nylon 6 Zytel® pellets (available from E.I. *DuPont de Nemours* and Co., under the product name ZYTEL® 7301), 8.8 grams of CuI, 100 grams of aluminum distearate, and 6 kg of fiberglass (TP57, available from Nippon Sheet Glass Co., Ltd.) were mixed and extruded on the twin-screw extruder (ZSK-40 of W&P).

5kg of the obtained pellets were dried in a dehumidified dryer set at 80°C for more than 4 hours and mixed with 10grams of a dye mixture of the amine salt of anthraquinone dye of formula[I-21] (6.6grams), perinone red dye of the formula [1-3] used in Example A (2.3 grams) and anthraquinone yellow dye of the formula [a] used in Example A (1.1 grams).

The dye-mixed pellets above were then molded into the test pieces according to the IS03167 on Toshiba IS 170FIII molding machine, with cylinder temperature set at 260°C and mold temperature at 80°C, and the test pieces of 60mm x 18mm x 1.5mm on Sumitomo 75T molding machine, with cylinder temperature set at 260°C and mold temperature at 80°C.

### Comparative Example H

14 kg of Nylon 6 Zytel® pellets (available from E.I. DuPont de Nemours and Co., under the product name ZYTEL® 7301), 8.8 grams of CuI, 100 grams of aluminum distearate, and 6 kg of fiberglass (TP57, available from Nippon Sheet Glass Co., Ltd.) were mixed and extruded on the twin-screw extruder (ZSK-40 of W&P).

5kg of the obtained pellets were dried in a dehumidified dryer set at 80°C for more than 4 hours and mixed with 28grams of nigrosine dye.

The dye-mixed pellets above were then molded into the test pieces according to the IS03167 on Toshiba IS 170FIII molding machine, with cylinder temperature set at 260°C and mold temperature at 80°C , and the test pieces of 60mm x 18mm x 1.5mm on Sumitomo 75T molding machine, with cylinder temperature set at 260°C and mold temperature at 80°C.

### Comparative Example I

14 kg of Nylon 6 Zytel® pellets (available from E.I. DuPont de Nemours and Co., under the product name ZYTEL® 7301), 8.8 grams of CuI, 100 grams of aluminum distearate, and 6 kg of fiberglass (TP57, available from Nippon Sheet Glass Co., Ltd.) were mixed and extruded on the twin-screw extruder (ZSK-40 of W&P).

5kg of the obtained pellets were dried in a dehumidified dryer set at 80°C for more than 4 hours and mixed with 5 grams of carbon black and 28grams of nigrosine dye.

The dye-mixed pellets above were then molded into the test pieces according to the IS03167 on Toshiba IS 170FIII molding machine, with cylinder temperature set at 260°C and mold temperature at 80°C, and the test pieces of 60mm x 18mm x 1.5mm on Sumitomo 75T molding machine, with cylinder temperature set at 260°C and mold temperature at 80°C.

### (9) Tensile properties and heat Aging

Tensile strength and elongation were measured in Table 9 according to ISO527 after molding and after heat aging at 150°C for 1000 hours. Test piece appearance was also observed.

**Table 9**

| | | Example G | Comparative | Comparative |
|---|---|---|---|---|
| | | | Example H | Example I |
| After Molding | Tensile Strength (MPa) | 183 | 171 | 190 |
| | Elongation (%) | 3.6 | 3.4 | 3.8 |
| After Aging | Tensile Strength (MPa) | 191 | 181 | 155 |
| | Elongation(%) | 3.1 | 3.2 | 2.1 |
| | Appearance | Black | Dark brown | Black |

### (10) Laser welding test

The 60mm x 18mm x 1.5mm test pieces were placed so that 20mm of each be overlapped. The overlapped area was irradiated with a diode laser (SDL-FD25, 820nm continuous) set at 4W with 3mm diameter for 10 seconds. (See Fig. 3&4). See Figures 3 and 4 depicting the arrangement of upper test piece 9 and lower test piece 10 for this test. The laser 11 is focused in the area 12 and the test pieces 9 and 10 are thereby joined together. Figures 3-6 illustrate preparation of laser welding test and how to carry out the laser welding tests.

**Table 10**

| Upper test piece | Example G | Comparative Example H |
|---|---|---|
| Lower test piece | Comparative Example I | Comparative Example I |
| Welding results | Good adhesion | Could not adhere |

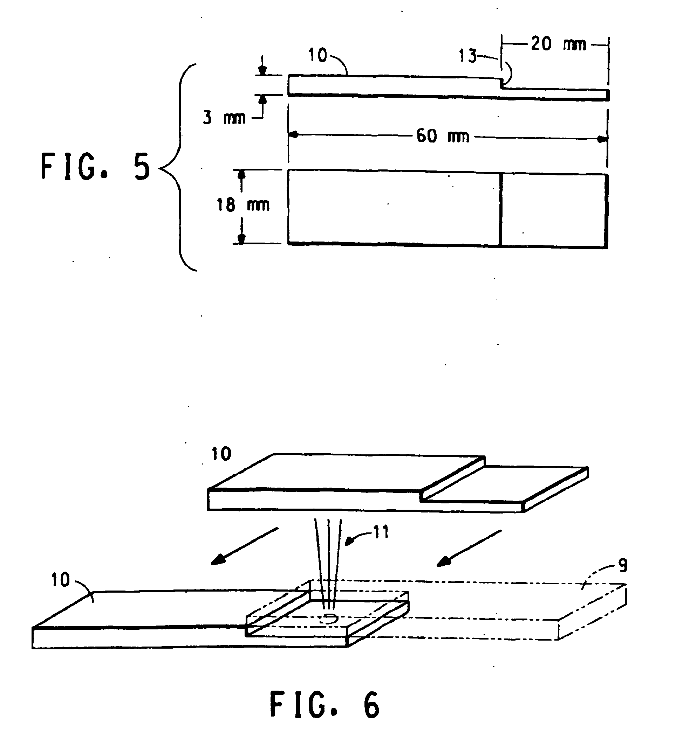

A variation of the test described immediately above is shown in Figures 5 and 6. Each of the upper test piece 9 and lower test piece 10 have a notch 13 which is 20 mm in length. When the test pieces 9 and 10 are joined together, a smooth surface is thereby created, which is subjected to the laser 11 as described above.

Example G exhibited good adhesion in laser welding with an opaque workpiece part for a laser beam, being made of thermoplastic resin containing carbon black. The mechanical properties after molding and aging showed no deterioration and appearance of thermoplastic resin was not changed even when a colorant was added.

### Example J

400 grams of Nylon 66 ZYTEL 101pellets (available from E.I. DuPont de Nemours and Co.) were dried under vacuum at 120°C, for more than 8 hours, then mixed with a mixture of amine salt of anthraquinone dye of formula [I-21] (0.53 g) with perinone red dye represented by the formula [IV-3] (0.18 g) and anthraquinone yellow dye represented by the formula [a] (0.09 g) in a stainless tumble mixer with stirring for one hour. The mixture was then injection molded to form the injection molded test specimens (whose sizes are 48 mm × 86mm x 3 mm) using K50-C produced by Kawaguchi Steel K.K. and the cylinder temperature was set to 290°C. Mold temperature was 60°C. Good and uniformly black appearance and surface gloss without color shading of the specimens were observed.

### Example K

400 grams of Nylon 66 ZYTEL 101 pellets (available from E.I. DuPont de Nemours and Co.) were dried under vacuum at 120°C, for more than 8 hours, then mixed with a mixture of amine salt of anthraquinone dye of the formula [II-8] (0.53 g) with perinone red dye represented by the formula [IV-3] (0.18 g) and anthraquinone yellow dye represented by the formula [a] (0.09 g) in a stainless tumble mixer with stirring for one hour. The mixture was then injection molded to form the injection molded test specimens (whose sizes are 48 mm x 86mm x 3 mm) using K50-C produced by Kawaguchi Steel K.K. and the cylinder temperature was set to 290°C. Mold temperature was 60°C. Good and uniformly black appearance and surface gloss without color shading of the specimens were observed.

### Comparative Example L

400 grams of Nylon 66 ZYTEL 101pellets (available from E.I. DuPont de Nemours and Co.) were dried under vacuum at 120°C, for more than 8 hours, then mixed with a mixture of anthraquinone violet dye of the following formula [d] (0.68 g) with quinophthalone yellow dye represented by the formula [f] (0.12 g) in a stainless tumble mixer with stirring for one hour. The mixture was then injection molded to form the injection molded test specimens (whose sizes are 48 mm x 86mm x 3 mm) using K50-C produced by Kawaguchi Steel K.K. and the cylinder temperature was set to 290°C. Mold temperature was 60°C. Good and uniformly black appearance and surface gloss without color shading of the specimens were observed.
formula [f]:

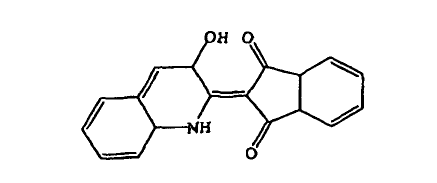

**Table 11**

| | | Example J | Example K | Comparative. Example L |
|---|---|---|---|---|
| Transmission | TA | 0.94 | 0.94 | 0.93 |
| | TB | 0.95 | 0.96 | 0.91 |
| OD | | 2.40 | 2.41 | 2.32 |
| Thermal Resistance ΔE | | 0.51 | 0.47 | 1.30 |
| Moisture Resistance ΔE | | 0.14 | 0.36 | 1.02 |
| TG/DTA | | | | |
| Exothermic peak (°C) / | | 346.5,506.2/ | 346.9/ | 320.9/ |
| Endothermic peak (°C) | | none | none | 179.5 |

This testing demonstrates that Examples J and K showed high transmittance at a main wavelength in infra-red region (800 nm to 1200 nm) and good surface gloss. In thermal and moisture resistances, Examples J and K were much better than Comparative Example L containing a neutral anthraquinone.

### Example M

400 grams of glass reinforced polyester pellets (prepared from terephthalic acid and ethylene glycol the intrinsic viscosity of which is 0.85 when measured at 25 °C as a 1% solution in a mixed solution of phenol and dichlorobenzene with the weight ratio of 1/1 and containing 30wt% chopped strand glass fibers 187H produced by Nippon Electric Glass Co., Ltd. based on a total weight of the polyester resin composition) were dried under vacuum at 120°C, for more than 8 hours, then mixed with a mixture of amine salt of anthraquinone dye of formula [I-11] (0.50 g), amine salt of anthraquinone dye represented by the formula [I-14] (0.40 g) and amine salt of anthrapyridone dye represented by the formula [VI-2] (0.10 g) in a stainless tumble mixer with stirring for one hour. The mixture was then injection molded to form the injection molded test specimens (whose sizes are 48 mm x 86mm x 3 mm) using K50-C produced by Kawaguchi Steel K.K. and the cylinder temperature was set to 290°C. Mold temperature was 60°C. Good and uniformly black appearance and surface gloss without color shading of the specimens were observed. See Table 12.

### Comparative Example N

400 grams of glass reinforced polyester pellets of Example M were dried under vacuum at 120°C, for more than 8 hours, then mixed with a mixture of anthraquinone violet dye of the following formula [d] (0.68 g) with quinophthalone yellow dye represented by the formula [f] (0.12 g) in a stainless tumble mixer with stirring for one hour. The mixture was then injection molded to form the injection molded test specimens (whose sizes are 48 mm x 86mm x 3 mm) using K50-C produced by Kawaguchi Steel K.K. and the cylinder temperature was set to 290°C. Mold temperature was 60°C. Good and uniformly black appearance and surface gloss without color shading of the specimens were observed. See Table 12

**Table 12**

| | | Example *M* | *Comparative*⁵ Example N |
|---|---|---|---|
| Transmission | TA | 0.92 | 0.92 |
| | TB | 0.85 | 0.89 |
| OD | | 1.90 | 1.86 |
| Moisture Resistance AE | | 0.61 | 3.58 |
| TG/DTA | | | |
| Exothermic peak (°C)/ | | 337.0/ | 320.9/ |
| Endothermic peak (°C) | | none | 179.5 |

This testing demonstrates that in moisture resistances Examples M were much better than Comparative Example N containing a neutral anthraquinone.If a colored resin composition as like Comparative Example N is used in rich humid atmosphere, it has high possibility to discolor.

### Example O - Example R, Comparative Example S -T

Fiberglass reinforced nylon 6 (Zytel®73G30L, available from E. I. DuPont de Nemours and Co.) and dyes were dry-blended with the amount described in table 13. The blended material was molded into two types of test pieces: one for mechanical properties, and another for laser welding. Test pieces for mechanical properties were molded according to the IS03167 on the Toshiba IS 170FIII injection molding machine, with cylinder temperature set at 260°C and mold temperature at 80°C. Test pieces for laser welding, with dimensions illustrated as in Figure 5, were molded on the Sumitomo Juki 75T injection molding machine, with cylinder temperature set at 250°C and mold temperature set at 80°C. Tensile strength and elongation were measured according to ISO527 and notched Charpy impact strength was measured according to ISO179 Laser welding was conducted using two pieces of the test pieces described above, combined as illustrated in Figure 6. Each Example from O to R and Comparative Example S was used as Upper test piece and Comparative Example T was used as Lower test piece. Diode laser (wavelength 940nm, manufactured by Rofin-Sinar Laser GmbH) was irradiated with various power and speed, with 3mm diameter. Tensile strength of the welded test pieces were measured on Autograph (manufactured by Shimazu Seisakusho) by pulling apart at 5mm/minute and its maximum load was recorded

**Table 13**

| | | Example | Example | Example | Example | Comp. | Comp. |
|---|---|---|---|---|---|---|---|
| | | O | P | Q | R | Ex.S | Ex. T |
| 73G30L kg | | 4.9925 | 4.9925 | 4.9925 | 4.9925 | 5 | 4.99 |
| Amine salt of anthraquinone dye [I-21] | | 5.00g | 5.00g | | | | |
| Amine salt of anthraquinone dye [I-23] | | | | 5.00g | | | |
| Amine salt of anthraquinone dye [I-13] | | | | | 5.63g | | |
| Monoazo complex red dye [V-2] | | 1.67g | | | | | |
| Monoazo complex orange dye [V-3] | | 0.83g | | | | | |
| Perinone red dye [IV-3] | | | 1.67g | 2.50g | 1.88g | | |
| Yellow dye [a] | | | 0.83g | | | | |
| Carbon black | | | | | | | 10g |
| Tensile strength | MPa | 175 | 170 | 176 | 174 | 179 | 185 |
| Elongation | % | 3.8 | 3.7 | 3.9 | 3.8 | 3.5 | 3.4 |
| Notched Charpy | KJ/m² | 12.2 | 12.4 | 12.4 | 12.4 | 13.4 | 12.2 |
| Laser Welding at 50W | | | | | | | |
| 2.5m/min Kgf | Kgf | 195 | 193 | 197 | 199 | 203 | - |
| 5m/min Kgf | Kgf | 194 | 186 | 182 | 189 | 162 | - |
| 10m/min Kgf | Kgf | 99 | 99 | 132 | - | 134 | - |

### Example U - Example Z, Comparative Example AA - AB

Fiberglass reinforced nylon 66 (Zytel®70G33HS1L, available from E. I. DuPont de Nemours and Co.) and dyes were dry-blended with the amount described in table 13. The blended material was molded into two types of test pieces: one for mechanical properties, and another for laser welding. Test pieces for mechanical properties were molded according to the IS03167 on the Toshiba IS 170FIII injection molding machine, with cylinder temperature set at 280°C and mold temperature at 80°C. Test pieces for laser welding, with dimensions illustrated as Figure 5, were molded on the Sumitomo Juki 75T injection molding machine, with cylinder temperature set at 270°C and mold temperature set at 80°C. Tensile strength and elongation were measured according to ISO527 and notched Charpy impact strength was measured according to ISO 179. Laser welding was conducted using two pieces of the test pieces described above, combined as illustrated in Figure 6. Each Example from U to Z and Comparative Example AA was used as Upper test piece and Comparative Example AB was used as Lower test piece. Diode laser (wavelength 940nm, manufactured by Rofin-Sinar Laser GmbH) was irradiated with various power and speed, with 3mm diameter. Tensile strength of the welded test pieces were measured on Autograph (manufactured by Shimazu Seisakusho) by pulling apart at Smm/minute and its maximum load was recorded.

**Table 14**

| | | Example | Example | Example | Example | Example | Example | Comp. | Comp. |
|---|---|---|---|---|---|---|---|---|---|
| | | U | V | W | X | Y | Z | Ex. AA | Ex. AB |
| 70G33HSIL kg | | 4.9925 | 4.9925 | 4.9925 | 4.9925 | 4.9925 | 4.9925 | 5 | 4.99 |
| Amine salt of anthraquinone dye [I-21] | | 5.00g | 5.00g | | | | | | |
| Amine salt of anthraquinone dye [I-23] | | | | 5.00g | | | | | |
| Amine salt of anthraquinone dye [1-13] | | | | | 5.63g | | | | |
| Amine salt of anthraquinone dye [II-8] | | | | | | 5.00g | | | |
| Amine salt of anthraquinone dye [II-7] | | | | | | | 5.00g | | |
| Monoazo complex red dye [V-2] | | 1.67g | | | | | | | |
| Monoazo complex orange dye [V-3] | | 0.83g | | | | | | | |
| Perinone red dye [IV-3] | | | 1.67g | 2.50g | 1.88g | 1.67g | 1.67g | | |
| Yellow dye [a] | | | 0.83g | | | 0.83g | 0.83g | | |
| Carbon black | | | | | | | | | 10g |
| Tensile strength | MPa | 198 | 203 | 197 | 197 | 197 | 194 | 206 | 207 |
| Elongation % | % | 3.5 | 3.3 | 3.4 | 3.5 | 3.5 | 3.4 | 3.6 | 3.2 |
| Notched Charpy | kJ/m² | 12.7 | 12.4 | 12.8 | 12.6 | 12.7 | 12.5 | 12.8 | 11.9 |

| Laser Welding at 80W | | | | | | | | | |
|---|---|---|---|---|---|---|---|---|---|
| 2.5m/min kgf | kgf | 82 | 57 | 96 | 86 | 204 | 177 | 95 | - |
| 5m/min kgf | kgf | 180 | 193 | 184 | 181 | 192 | 196 | 184 | - |
| 10m/min kgf | kgf | 182 | 113 | 185 | 167 | 89 | - | 172 | - |

### Example AC, Comparative Example AD - AE

Fiberglass reinforced polyester pellets of Example M and dyes were dry-blended with the amount described in table 14. The blended material was molded into two types of test pieces: one for mechanical properties, and another for laser welding. Test pieces for mechanical properties were molded according to the IS03167 on the Toshiba IS 170FIII injection molding machine, with cylinder temperature set at 280°C and mold temperature at 60°C. Test pieces for laser welding, with dimensions illustrated as Figure 5, were molded on the Sumitomo Juki 75T injection molding machine, with cylinder temperature set at 280°C and mold temperature set at 60°C.
Tensile strength and elongation were measured according to IS0527 and notched Charpy impact strength was measured according to ISO 179.
Laser welding was conducted using two pieces of the test pieces described above, combined as illustrated in Figure 6. Example AC and Comparative Example AD was used as Upper test piece and Comparative Example AE was used as Lower test piece. A diode laser (wavelength 940nm, manufactured by Rofin-Sinar Laser GmbH) was irradiated with various power and speed, with 3mm diameter. Tensile strength of the welded test pieces were measured on Autograph (manufactured by Shimazu Seisakusho) by pulling apart at 5mm/minute and its maximum load was recorded.

**Table 15**

| | | Example | Comp. | Comp. |
|---|---|---|---|---|
| | | AC | Ex. AD | Ex. AE |
| Polyester pellets kg | | 5.0 | 5.0 | 5.0 |
| Amine salt of anthraquinone dye ([-I 1] | | 6.25 | | |
| Amine salt of anthraquinone dye [1-14) | | 5.0 | | |
| Amine salt of anthraquinone dye [VI-2] | | 1.25 | | |
| Carbon black | | | | 22.5 |
| Tensile strength | MPa | 139 | 140 | 138 |
| Elongation | % | 3.7 | 3.2 | 3.4 |
| Notched Charpy | KJ/m² | 11 | 11 | 11 |
| Laser Welding at 50W | | | | |
| 5m/min | Kgf | 149 | 145 | - |

| | | | | |
|---|---|---|---|---|
| Example AC is same compositon as that in Example M | | | | |
| Comp. Ex. AD comprises natural clored glass reinforced polyester used in Example M or N. | | | | |
| Comp. Ex. AE comprises black colored glass reinforced polyester used in Example M or N by adding carbon black to the natural colored polyester. | | | | |

## Claims

1. A thermoplastic resin composition for laser welding comprising:
1) thermoplastic resin; and
2) laser-transmitting black colorant which transmits near-infrared laser light from 800-1200 nm, comprising amine salt of anthraquinone dye.

2. A thermoplastic resin composition for laser welding comprising:
1) thermoplastic resin; and,
2) laser-transmitting black colorant which transmits near-infrared laser light from 800-1200 nm, comprising amine salt of anthraquinone dyes of formula [I] or formula [II],
wherein Formula [I] is: 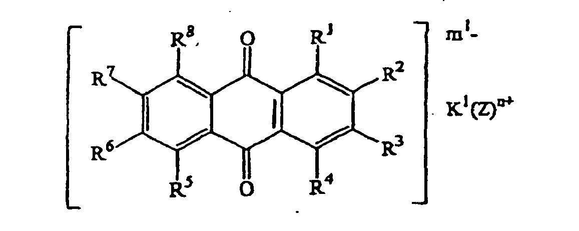 wherein R¹ to R⁸, which may be the same or different, are independently selected from the group consisting of H, alkyl, aryl, alkenyl, alkoxy, amino, hydroxy, halogen atom, acyl, acyloxy, acylamide, acyl-N-alkylamide, carboxyl, alkoxycarbonyl, cyclohexylamide, sulfonyl, formula [I-a], or -Y-W, and at least one of R¹ to R⁸ is of formula [I-a], wherein Y is S, O, or NH; wherein W is selected from unsubstituted or substituted alkyl group, alkenyl group, and unsubstituted or substituted aryl group; wherein (Z)ⁿ⁺ represents ammonium ion or a cation derived from an organic amine compounds or a basic dye; wherein n is 1 or 2, m¹ is an integer from 1 to 4 and K' is the ratio of m¹ / n; and wherein formula [I-a] is: 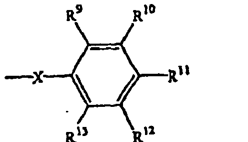 wherein X is O or NH, and R⁹ to R¹³, which may be the same or different, are independently selected from the group consisting of H, alkyl, aryl, alkenyl, alkoxy, amino, N-alkylamide, N-arylamide, hydroxy, halogen atom, acyl, acyloxy, acylamide, acyl-N-alkylamide, carboxyl, alkoxycarbonyl, or sulfonyl; wherein at least one of R¹ to R⁸ and R⁹ to R¹³ is sulfonyl group; and wherein formula [II] is: 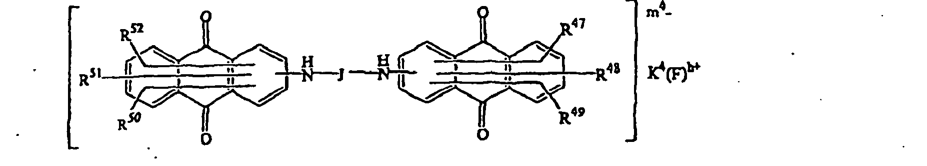 wherein R⁴¹ to R⁵², which may be the same or different, are independently selected from the group consisting of H, alkyl, aryl, alkenyl, alkoxy, amino, N-alkylamide,N-arylamide, hydroxy, halogen atom, acyl, acyloxy, acylamide, acyl-N-alkylamide, carboxyl, alkoxycarbonyl, or sulfonyl; and at least one of R⁴⁷ to R⁵² is of sulfonyl; and
Formula J in formula [II] is selected from formula [II-a] or formula [II-b] and binds two anthraquinone,
Wherein formula [II-a] is: 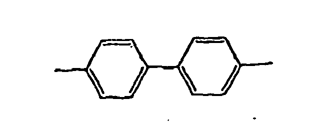 and formula [II-b] is: 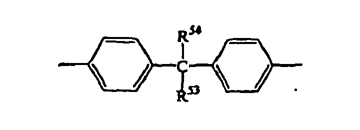 wherein R⁵³ to R⁵⁴, which may be the same or different, are independently selected from the group consisting of alkyl(having 1 to 8 carbon atoms) or hydrogen ;
and wherein (F)^{b+} represents ammonium ion or a cation derived from an organic amino compounds or a basic dye wherein h is 1 or 2, m⁴ is an integer from 1 to 4 and K⁴ is the ratio of m⁴/h.

3. The composition of claim 1 further comprising a second dye mixed with said amine salt of said anthraquinone dye to produce a laser-transmitting black dye.

4. The composition of claim 2 further comprising a second dye mixed with said amine salt of a said anthraquinone dye to produce a laser-transmitting black dye.

5. The composition of Claim 4, wherein said second dye is selected from the group consisting of perinone dyes, monoazo complex dyes, anthrapyridone dyes and anthraquinone dyes.

6. The composition of Claim 2 further comprising (i) a red dye to be mixed with said amine salt of said anthraquinone dye to produce a laser-transmitting black dye, said red dye selected from the group consisting of perinone dyes, monoazo complex dyes, and anthrapyridone dyes; and (ii) an additional yellow dye to be added to said mixture selected from the group consisting of monoazo complex dyes and anthraquinone dyes.

7. The composition of any one of claims 1-6 in which said thermoplastic resin is polyamide or polyester.

8. The composition of Claim 7, further comprising reinforcing agent.

9. A laser-transparent article formed from the composition of any one of Claims 1-6.

10. An article formed by laser welding an opaque article with the laser-transparent article of Claim 9.

11. A laser-transmitting black colorant which transmits near-infrared laser light from 800-1200 nm suitable for being mixed with a thermoplastic resin comprising at least amine salt of anthraquinone dyes.

12. A laser-transmitting black colorant which transmits near-infrared laser light from 800-1200 nm suitable for being mixed with a thermoplastic resin comprising amine salt of anthraquinone dyes of formula [I] or formula [II],
wherein Formula [I] is: 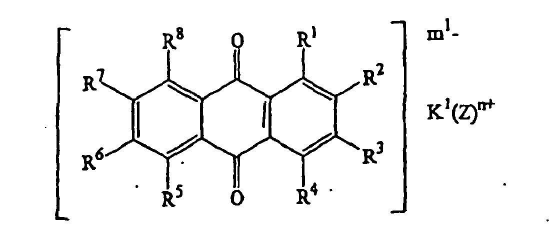 wherein R¹ to R⁸, which may be the same or different, are independently selected from the group consisting of H, alkyl, aryl, alkenyl, allcoxy, amino, hydroxy, halogen atom, acyl, acyloxy, acylamide, acyl-N-alkylamide, carboxyl, allcoxycarbonyl, cyclohexylamide, sulfonyl, formula [I-a], or -Y-W, and at least one of R¹ to R⁸ is of formula [I-a]; wherein Y is S, O, or NH; wherein W is selected from unsubstituted or substituted alkyl group, alkenyl group, and unsubstituted or substituted aryl group; wherein (Z)ⁿ⁺ represents ammonium ion or a cation derived from an organic amine compounds or a basic dye; wherein is 1 or 2, m¹ is an integer from 1 to 4 and K¹ is the ratio of m¹/n;
and wherein formula [I-a] is: 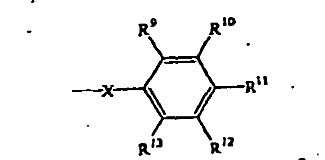 wherein X is O or NH, and R⁹ to R¹³, which may be the same or different, are independently selected from the group consisting ofH, alkyl, aryl, alkenyl, alkoxy, amino, N-alkylamide, N-arylamide, hydroxy, halogen atom, acyl, acyloxy, acylamide, acyl-N-alkylamide, carboxyl, alkoxycarboayl, or sulfonyl;
wherein at least one of R¹ to R⁸ and R⁹ to R¹³ is sulfonyl group; and wherein formula is [II]: 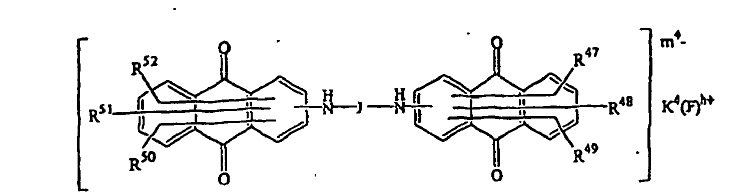 wherein R⁴⁷ to R⁵², which may be the same or different, are independently selected from the group consisting of H, alkyl, aryl, alkenyl, alkoxy, amino, N-alkylamide,N-arylamide, hydroxy, halogen atom, acyl, acyloxy, acylamide, acyl-N-alkylamide, carboxyl, alkoxycarbonyl, or sulfonyl; and at least one of R⁴⁷ to R⁵² is of sulfonyl; and
Formula J in formula [II] is selected from formula [II-a] or formula [II-b] and binds two anthraquinone,
Wherein the formula [II-a] is: 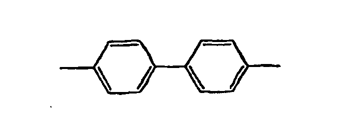 and wherein the formula [II-b] is: 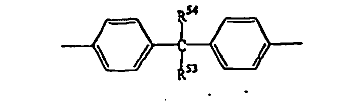 Wherein R⁵³ to R⁵⁴, which may be the same or different, are independently selected from the group consisting of alkyl(having 1 to 8 carbon atoms) or hydrogen;
and wherein (F)^{h+} represents ammonium ion or a cation derived from an organic amino compounds or a basic dye wherein h is 1 or 2, m⁴ is an integer from 1 to 4 and K⁴ is the ratio of m⁴/h.

13. The composition of Claim 12, where in the laser-transmitting black colorant suitable for being mixed with a thermoplastic resin comprising at least amine salt of anthraquinone dyes of formula [I] where as at least one of R⁹, R¹⁰, R¹¹, R¹² and R¹³ of formula [I-a] is sulfonyl group.

14. The black colorant of claim 12 or the composition of claim 2, wherein the amine salt of the anthraquinone dye comprises a compound given in the following tables:
**Tablel-1**
| Pro. Ex. No. | R¹,R²,R³,R⁴,R⁵,R⁶,R⁷,R⁸ | K¹(Z)ⁿ⁺ |
|---|---|---|
| I-1 | R²=R⁵=R⁶=R⁷=R⁸=H,R⁴=OH,R¹=R³=I-a, Formula[I-a]:X=NH,R¹¹=NO₂,R⁹=SO₃H or O₃⁻ R¹⁰=R¹²=R¹³=H | Rosin ammonium |
| I-2 | R²=R³=R⁵=R⁶=R⁷=R⁸=H,R⁴=OH,R¹=I-a, Formula[I-a]:X=NH,R¹¹=CH₃,R⁹=SO₃⁻,R¹⁰=R¹²=R¹³=H | H₃N⁺(CH₂)₆NH₂ |
| I-3 | R²=R³=R⁵=R⁶=R⁷=R⁸=H,R¹=I-a;R⁴=Y-W, Formula[I-a]:X=NH,R¹¹=CH₃,R⁹=SO₃,R¹⁰=R¹²=R¹³=H Y-W:Y=NH,W=CH₃ | C₁₂H₂₅N⁺H₃ |
| I-4 | R²=R³=R⁵=R⁶=R⁷=R⁸=H,R¹=R⁴=I-a, Formula[I-a]:X=NH,R¹¹=CH₃R⁹=SO₃H or SO₃⁻ ,R¹⁰=R¹²=R¹³=H | (C₄H₉)₄N⁺ |
| I-5 | R²=R³=R⁵=R⁶=R⁷=R⁸=H,R¹=R⁴=I-a, Formula[I-a]:X=NH,R⁹=R¹¹=R¹³=CH₃,R¹²=SO₃H or SO₃⁻ ,R¹⁰=H | H₃N⁺(CH₂)₆NH₂ |
| I-6 | R²=R³=R⁵=R⁶=R⁷=R⁸=H,R¹=R⁴=I-a, Formula[I-a]:X=NH,R¹¹=CH₃,R⁹=SO₃⁻,R¹⁰=R¹²=R¹³=H | (N⁺H₃)₂CNH |
| I-7 | R²=R³=R⁵=R⁶=R⁷=R⁸=H,R¹=R⁴=I-a, Formula[I-a]:X=NH,R¹¹=C₄H₉,R⁹=SO₃H or SO₃⁻ ,R¹⁰=R¹²=R¹³=H | H₃N⁺(CH₂)₆NH₂ |
| I-8 | R²=R³=R⁵=R⁷=R⁸=H,R¹=R⁴=I-a,R⁶=y-W, Formula[I-a]:X=NH,R¹¹=CH₃,R⁹=SO₃H or SO₃⁻ ,R¹⁰=R¹²=R¹³=H Y-W:Y=S,W=methylphenyl | H₃N⁺(CH₂)₄NH₂ |
| I-9 | R²=R³=R⁵=R⁶=R⁷=R⁸ =H,R¹=R⁴=I-a, Formula[I-a]:X=NH,R¹¹=C₄H₉,R⁹=SO₃⁻,R¹⁰=R¹²=R¹³=H | 2(H₃N⁺(CH₂)₆NH₂) |
| 1-10 | R²=R⁵=R⁶=R⁷=R⁸=H,R³=SO₃⁻,R⁴=NH₂,R¹=I-a, Formula[I-a]:X=NH,R¹¹ N(C₃H₇)COCH₃,R⁹=R¹⁰=R¹²=R¹³=H | N-trimethyl-N-benzyl Ammonium |
| I-11 | R²=R⁵=R⁷=R⁸=H,R³=R⁶=SO₃⁻,R⁴=NH₂,R¹=I a, Formula[I-a]:X=NH,R¹¹=NHCOCH₃,R⁹=R¹⁰=R¹²=R¹³=H | 2(CH₃)₄N⁺ |
| I-12 | R²=R³=R⁵=R⁶=R⁷=R⁸=H,R¹=R⁴=I-a, Formula[I-a]:X=NH,R⁹=R¹¹=R¹³=CH₃,R¹²=SO₃H or SO₃⁻ ,R¹⁰=H | Diphenylguanidine ammonium |
| I-13 | R²=R³=R⁵=R⁶=R⁷=R⁸=H,R¹=R⁴=I-a, Formula[I-a]:X=NH,R¹¹=CH₃R⁹=SO₃H or SO₃⁻ ,R¹⁰=R¹²=R¹³=H | Bis(p-methylphenyl) guanidine ammonium |
| I-14 | R²=R³=R⁴=R⁵=R⁶=R⁷=H,R¹=R⁸=I-a, Formula[I-a]:X=NH,R¹¹=CH₃,R⁹=SO₃H or SO₃⁻ R¹⁰=R¹²=R¹³=H | C₁₂H₂₅N⁺H₃ |
| I-15 | R⁵=R⁶=R⁷=R⁸=H,R¹=R⁴=NH₂,R²=R³=I-a, Formula[I-a]:X=O,R¹¹=CH₃,R⁹=SO₃H or SO₃⁻ R¹⁰=R¹²=R¹³=H | (CH₃)₄N⁺ |
| | | |
|---|---|---|
| Pro.Ex.No.=Product Example Number | | |
**Tablel-2**
| Pro. Ex. No. | R¹,R²,R³,R⁴,R⁵,R⁶,R⁷,R⁸ | K¹(Z)ⁿ⁺ |
|---|---|---|
| I-16 | R⁵=R⁶=R⁷=R⁸=H,R¹=R⁴=NH₂,R²=R³=I-a, Formula[I-a]:X=O,R¹¹=SO₃H or SO₃⁻,R⁹=R¹⁰=R¹²=R¹³=H | H₃N⁺(CH₂)₆NH₂ |
| I-17 | R³=R⁶=R⁷=R⁸=H,R²=CH₃,R⁴=NH₂,R⁵=SO₃H or SO₃⁻,R¹=I-a, Formula[1-a]:X=NH,R¹¹=CH₃,R⁹=SO₃H or SO₃⁻ ,R¹⁰=R¹²=R¹³=H | C₄H₉N⁺H₃ |
| I-18 | R³=R⁶=R⁷=R⁸=H,R²=Br,R⁴=NH₂,R⁵=SO₃H or SO₃⁻,R¹=I-a, Formula[I-a]:X=NH,R¹¹=CH₃,R⁹=SO₃H or SO₃⁻ ,R¹⁰=R¹²=R¹³=H | H₃N⁺(CH₂)₄NH₂ |
| I-19 | R²=R⁶=R⁷=R⁸=H,R³-OC₁₂H₂₅,R⁴=NH₂,R⁵=SO₃H or SO₃ ,R¹=I-a, Formula[I-a]:X=NH,R¹¹=SO₃H or SO₃,R⁹=R¹⁰=R¹²=R¹³=H | C₂H₅OC₃H₆N⁺H₃ |
| I-20 | R²=R³=R⁶=R⁷=H'R⁴=R⁸=OH,R¹=R⁵=I-a, Formula[I-a]:X=NH,R¹¹=CH₃,R⁹=SO₃H or SO₃⁻ ,R¹⁰=R¹²R¹³=H | (C₈H₁₇)₄N⁺ |
| I-21 | R²=R³=R⁵=R⁶=R⁷=R⁸=H,R^{I}=R⁴=I-a, Formula[I-a]:X=NH,R⁹=R¹¹=R¹³=CH₃,R¹²=SO₃⁻,R¹⁰=H | 2(H₃N⁺(CH₂)₆NH₂) |
| I-22 | R²=R⁵=R⁶=R⁷=R⁸=H,R³=SO₃ ,R⁴=NH₂,R¹=I-a, Formula[I-a]:X=NH,R¹¹=NHCOCH₃,R⁹=R¹⁰=R¹²=R¹³=H | C₄H₉N⁺H₃ |
| I-23 | R²=R³=R⁵=R⁶=R⁷=R⁸=H,R¹=R⁴=I-a, Formula[I-a]:X=NH,R¹¹=CH₃,R⁹=SO₃H or SO₃⁻ R¹⁰=R¹²=R¹³=H | H₃N⁺(CH₂)₆NH₂ |
| I-24 | R²=R³=R⁴=R⁵=R⁶=R⁷=H,R¹=R⁸=I-a, Formula[I-a]:X=NH,R¹¹=CH₃,R⁹=SO₃H or SO₃⁻ R¹⁰=R¹²=R¹³=H | C₂H₅OC₃H₆N⁺H₃ |
| I-25 | R²=R⁵=R⁶=R⁷=R⁸=H,R³=SO₃⁻,R⁴=NH₂,R¹=I-a, Formula[I-a]:X=NH,R¹¹=NHCOCH₃,R⁹=R¹⁰=R¹²=R¹³=H | H₃N⁺(CH₂)₆NH₂ |
| I-26 | R²=R⁵=R⁶=R⁷=R⁸=H,R³=SO₃⁻,R⁴=NH₂,R¹=I-a, ¹²=R¹³=H Formula[I-a]:X=NH,R¹¹=N(CH₃)COCH₃,R⁹=R¹⁰=R¹²=R¹³=H | Cyclohexyl ammonium |
| I-27 | R²=R³=R⁵=R⁶=R⁷=R⁸=H,R¹=R⁴=I-a, . Formula[I-a]:X=NH,R⁹=R¹¹=R¹³=CH₃,R¹²=SO₃H or SO₃⁻ ,R¹⁰=H | C₂H₅OC₃H₆N⁺H₃ |
| I-28 | R²=R³=R⁵=R⁶=R⁷=R⁸=H,R⁴=OH,R¹=I-a, Formula[I-a]:X=NH,R¹¹=CH₃,R⁹=SO₃⁻,R¹⁰=R¹²=R¹³=H | H₃N⁺(CH₂)₆NH₂ |
| I-29 | R²=R⁵=R⁶=R⁷=R⁸=H,R³=SO₃⁻,R⁴=NH₂,R¹=I-a, Formula[I-a]:X=NH,R¹¹=N(CH₃)COCH₃,R⁹=R¹⁰=R¹²=R¹³=H | N-trimethyl-N-benzyl Ammonium |
| I-30 | R³=R⁵=R⁶=R⁷=R⁸=H,R¹=R⁴=OH,R²=I-a, Formula[I-a]:X=NH,R⁹=CH₃,R¹¹=SO₃⁻,R¹⁰=R¹²=R¹³=H | N-tributyl-N-benzyl ammonium |
| I-31 | R⁵=R⁶=R⁷=R⁸=H,R¹=R⁴=NH₂,R³=SO₃⁻,R²=I-a, Formula[I-a]:X=O,R⁹=R¹⁰=R¹¹=R¹²=R¹³=H | C₄H₉N⁺H₃ |
| I-32 | R³=R⁶=R⁷=R⁸=H,R⁴=NH₂,R²=R⁵=SO₃H or SO₃,R¹=I-a, Formula[I-a]:X=NH,R¹¹=C₁₂H₂₅,R⁹=R¹⁰=R¹²=R¹³=H, | Benzylurea ammonium |
| I-33 | R²=R⁵=R⁶=R⁷=R⁸=H,R³=SO₃⁻,R⁴=NH₂,R¹=I-a, Formula[I-a]:X=NH,R¹⁰=COOC₂H₅R⁹=R¹¹=R¹²=R¹³=H | H₃N⁺(CH₂)₆NH₂ |
| | | |
|---|---|---|
| Pro.Ex-No.=Product Example Number | | |
**Table2**
| Pro. Ex. No. | J | R⁴⁷ | R⁴⁸ | R⁴⁹ | R⁵⁰ | R⁵¹ | R⁵² | K⁴(F)^{h+} |
|---|---|---|---|---|---|---|---|---|
| II-1 | Formula[II-a] | SO₃⁻ | NH₂ | H | SO₃⁻ | NH₂ | H | 2(H₃N⁺(CH₂)₆NH₂) |
| II-2 | formula[II-a] | SO₃⁻ | NH₂ | H | SO₃H | NH₂ | H | H₃N⁺(CH₂)₆NH₂ |
| II-3 | formula[II-a] | SO₃ | OH | H | SO₃H | OH | H | C₁₂H₂₅N⁺H₃ |
| II-4 | Formula[II-b], R⁵³=R⁵⁴=H | SO₃⁻ | NH₂ | H | NH₂ | Cl | H | C₂H₅OC₃H₆N⁺H₃ |
| II-5 | formula[II-b] , R⁵³=R⁵⁴=CH3 | SO₃⁻ | NH₂ | H | SO₃H | NH₂ | H | Bis(p-methylphenyl) guanidine ammonium |
| II-6 | formula[II-b] ; R⁵³=R⁵⁴=CH₃ | SO₃⁻ | NH₂ | H | SO₃⁻ | NH₂ | H | H₃N⁺(CH₂)₄N⁺H₃ |
| II-7 | formula[II-b] , R⁵³=R⁵⁴=H | SO₃⁻ | NH₂ | H | SO₃H | NH₂ | H | Rosin ammonium |
| II-3 | formula[II-b], R⁵³=R⁵⁴=H | SO₃⁻ | NH₂ | H | SO₃H | NH₂ | H | H₃N⁺(CH₂)₆NH₂ |
| II-9 | formula[II-b], R⁵³=H, R⁵⁴=obenyl | SO₃⁻ | OH | OCH₃ | SO₃H | OH | OCH₃ | (C₄H₉)₄N⁺ |
| II-10 | formula[II-b], R⁵³=R⁵⁴=H | SO₃⁻ | C₃H₉ | C₃H₉ | SO₃H | H | H | N-tributyl-N-benzyl Ammonium |
| | | | | | | | | |
|---|---|---|---|---|---|---|---|---|
| Pro.Ex.No.=Product Example Number | | | | | | | | |

## Patentansprüche

1. Thermoplast-Zusammensetzung zum Laserschweißen, die aufweist:
1) ein thermoplastisches Harz; und
2) einen laserlichtdurchlässigen schwarzen Farbstoff, der Nahinfrarot-Laserlicht von 800 - 1200 nm durchläßt und ein Aminsalz von Anthrachinonfarbstoff aufweist.

2. Thermoplast-Zusammensetzung zum Laserschweißen, die aufweist:
1) ein thermoplastisches Harz; und
2) einen laserlichtdurchlässigen schwarzen Farbstoff, der Nahinfrarot-Laserlicht von 800 - 1200 nm durchläßt und ein Aminsalz von Anthrachinonfarbstoffen mit der Formel (I) oder der Formel (II) aufweist,
wobei die Formel (I) lautet: 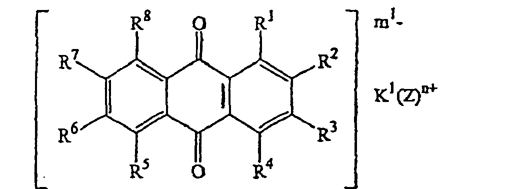 wobei R¹ bis R⁸, die gleich oder verschieden sein können, unabhängig voneinander aus der Gruppe ausgewählt sind, die aus H, Alkyl-, Aryl-, Alkenyl-, Alkoxy-, Amino-, Hydroxylgruppen, einem Halogenatom, Acyl-, Acyloxy-, Acylamid-, Acyl-N-alkylamid-, Carboxyl-, Alkoxycarbonyl-, Cyclohexylamid-, Sulfonylgruppen, einer Gruppe mit der Formel [I-a] oder aus -Y-W besteht, und wobei von R¹ bis R⁸ mindestens eine Komponente die Formel [I-a] aufweist; wobei Y für S, O oder NH steht; wobei W aus der Gruppe ausgewählt ist, die aus einer nichtsubstituierten oder substituierten Alkylgruppe, Alkenylgruppe und einer nichtsubstituierten oder substituierten Arylgruppe besteht;
wobei (Z)ⁿ⁺ ein Ammonium-Ion oder ein Kation darstellt, das von organischen Aminverbindungen oder einem basischen Farbstoff abgeleitet ist; wobei n gleich 1 oder 2 ist, m¹ eine ganze Zahl von 1 bis 4 und K¹ das Verhältnis m'/n ist;
und wobei die Formel [I-a] lautet: 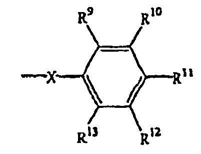 wobei X für O oder NH steht und R⁹ bis R¹³, die gleich oder verschieden sein können, unabhängig voneinander aus der Gruppe ausgewählt sind, die aus H, Alkyl-, Aryl-, Alkenyl-, Alkoxy-, Amino-, N-Alkylamid-, N-Arylamid-, Hydroxylgruppen, einem Halogenatom, Acyl-, Acyloxy-, Acylamid-, Acyl-N-alkylamid-, Carboxyl-, Alkoxycarbonyl-, oder Sulfonylgruppen besteht, und wobei von R¹ bis R⁸ und R⁹ bis R¹³ mindestens eine Komponente eine Sulfonylgruppe ist; und wobei die Formel [II] lautet: 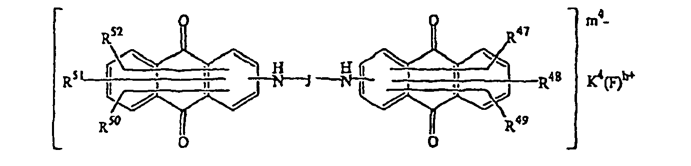 wobei R⁴⁷ bis R⁵², die gleich oder verschieden sein können, unabhängig voneinander aus der Gruppe ausgewählt sind, die aus H, Alkyl-, Aryl-, Alkenyl-, Alkoxy-, Amino-, N-Alkylamid-, N-Arylamid-, Hydroxylgruppen, einem Halogenatom, Acyl-, Acyloxy-, Acylamid-, Acyl-N-alkylamid-, Carboxyl-, Alkoxycarbonyl-, oder Sulfonylgruppen besteht, und wobei von R⁴⁷ bis R⁵² mindestens eine Komponente eine Sulfonylgruppe ist; und
wobei die Formel J in Formel [II] unter Formel [II-a] oder Formel [II-b] ausgewählt ist und zwei Anthrachinone bindet;
wobei Formel [II-a] lautet: 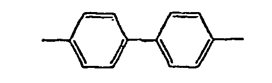 und wobei Formel [II-b] lautet: 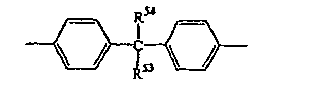 wobei R⁵³ bis R⁵⁴, die gleich oder verschieden sein können, unabhängig voneinander aus der Gruppe ausgewählt sind, die aus Alkyl (mit 1 bis 8 Kohlenstoffatomen) oder Wasserstoff besteht;
und wobei (F)^{h+} ein Ammonium-Ion oder ein Kation darstellt, das von einer organischen Aminoverbindung oder einem basischen Farbstoff abgeleitet ist, wobei h gleich 1 oder 2, m⁴ eine ganze Zahl von 1 bis 4 und K⁴ das Verhältnis m⁴/h ist.

3. Zusammensetzung nach Anspruch 1, die ferner einen zweiten Farbstoff aufweist, der mit dem Aminsalz des Arithrachinonfarbstoffs vermischt wird, um einen laserlichtdurchlässigen schwarzen Farbstoff zu erzeugen.

4. Zusammensetzung nach Anspruch 2, die ferner einen zweiten Farbstoff aufweist, der mit dem Aminsalz des Anthrachinonfarbstoffs vermischt wird, um einen laserlichtdurchlässigen schwarzen Farbstoff zu erzeugen.

5. Zusammensetzung nach Anspruch 4, wobei der zweite Farbstoff aus der Gruppe ausgewählt ist, die aus Perinonfarbstoffen, Monoazokomplex-Farbstoffen, Anthrapyridonfarbstoffen und Anthrachinonfarbstoffen besteht.

6. Zusammensetzung nach Anspruch 2, die ferner aufweist: (i) einen roten Farbstoff, der mit dem Aminsalz des Anthrachinonfarbstoffs zu vermischen ist, um einen laserlichtdurchlässigen schwarzen Farbstoff herzustellen, wobei der rote Farbstoff aus der Gruppe ausgewählt ist, die aus Perinonfarbstoffen, Monoazokomplex-Farbstoffen und Anthapyridonfarbstoffen besteht; und (ii) einen zusätzlichen gelben Farbstoff, der dem Gemisch zugesetzt werden soll und aus der Gruppe ausgewählt ist, die aus Monoazokomplex-Farbstoffen und Anthrapyridonfarbstoffen besteht.

7. Zusammensetzung nach einem der Ansprüche 1 - 6, wobei das thermoplastische Harz ein Polyamid oder Polyester ist.

8. Zusammensetzung nach Anspruch 7, die ferner ein Verstärkungsmittel aufweist.

9. Laserlichtdurchlässiger Artikel, der aus der Zusammensetzung nach einem der Ansprüche 1―6 geformt wird.

10. Artikel, der durch Laserschweißen eines opaken Artikels mit dem laserlichtdurchlässigen Artikel gemäß Anspruch 9 geformt wird.

11. Laserlichtdurchlässiger schwarzer Farbstoff, der Nahinfrarot-Laserlicht von 800 - 1200 nm durchläßt und sich zum Vermischen mit einem thermoplastischen Harz eignet, das zumindest ein Aminsalz von Anthrachinonfarbstoffen aufweist.

12. Laserlichtdurchlässiger schwarzer Farbstoff, der Nahinfrarot-Laserlicht von 800 - 1200 nm durchläßt und sich zum Vermischen mit einem thermoplastischen Harz eignet, das ein Aminsalz von Anthrachinonfarbstoffen mit der Formel [I] oder der Formel [II] aufweist,
wobei die Formel [I] lautet: 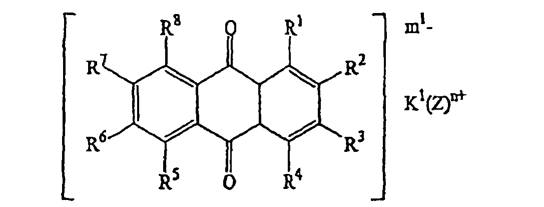 wobei R¹ bis R⁸, die gleich oder verschieden sein können, unabhängig voneinander aus der Gruppe ausgewählt sind, die aus H, Alkyl-, Aryl-, Alkenyl-, Alkoxy-, Amino-, Hydroxylgruppen, einem Halogenatom, Acyl-, Acyloxy-, Acylamid-, Acyl-N-alkylamid-, Carboxyl-, Alkoxycarbonyl-, Cyclohexylamid-, Sulfonylgruppen, einer Gruppe mit der Formel [I-a] oder aus -Y-W besteht, und wobei von R¹ bis R⁸ mindestens eine Komponente die Formel [I-a] aufweist; wobei Y für S, O oder NH steht; wobei W aus der Gruppe ausgewählt ist, die aus einer nichtsubstituierten oder substituierten Alkylgruppe, Alkenylgruppe und einer nichtsubstituierten oder substituierten Arylgruppe besteht;
wobei (Z)ⁿ⁺ ein Ammonium-Ion oder ein Kation darstellt, das von organischen Aminverbindungen oder einem basischen Farbstoff abgeleitet ist; wobei n gleich 1 oder 2 ist, m¹ eine ganze Zahl von 1 bis 4 und K¹ das Verhältnis m¹/n ist; und wobei die Formel [I-a] lautet: 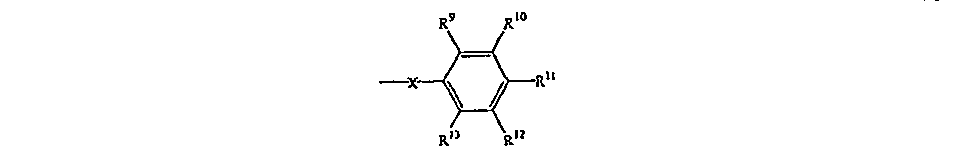 wobei X für O oder NH steht und R⁹ bis R¹³, die gleich oder verschieden sein können, unabhängig voneinander aus der Gruppe ausgewählt sind, die aus H, Alkyl-, Aryl-, Alkenyl-, Alkoxy-, Amino-, N-Alkylamid-, N-Arylamid-, Hydroxylgruppen, einem Halogenatom, Acyl-, Acyloxy-, Acylamid-, Acyl-N-alkylamid-, Carboxyl-, Alkoxycarbonyl-, oder Sulfonylgruppen besteht, und wobei von R¹ bis R⁸ und R⁹ bis R¹³ mindestens eine Komponente eine Sulfonylgruppe ist; und wobei die Formel [II] lautet: 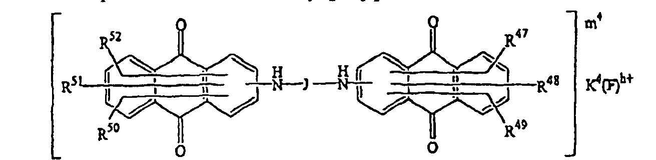 wobei R⁴⁷ bis R⁵², die gleich oder verschieden sein können unabhängig voneinander aus der Gruppe ausgewählt sind, die aus H, Alkyl-, Aryl-, Alkenyl-, Alkoxy-, Amino-, N-Alkylamid-, N-Arylamid-, Hydroxylgruppen, einem Halogenatom, Acyl-, Acyloxy-, Acylamid-, Acyl-N-alkylamid-, Carboxyl-, Alkoxycarbonyl- oder Sulfonylgruppen besteht, und wobei von R⁴⁷ bis R⁵² mindestens eine Komponente eine Sulfonylgruppe ist; und
wobei die Formel J in Formel [II] unter Formel [II-a] oder Formel [II-b] ausgewählt ist und zwei Anthrachinone bindet;
wobei Formel [II-a] lautet: 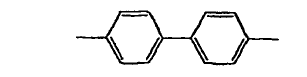 und wobei Formel [II-b] lautet: 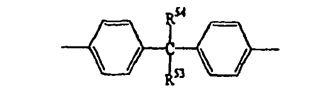 wobei R⁵³ bis R⁵⁴, die gleich oder verschieden sein können, unabhängig voneinander aus der Gruppe ausgewählt sind, die aus Alkyl (mit 1 bis 8 Kohlenstoffatomen) oder Wasserstoff besteht;
und wobei (F)^{h+} ein Ammonium-Ion oder ein Kation darstellt, das von organischen Aminoverbindungen oder einem basischen Farbstoff abgeleitet ist, wobei h gleich 1 oder 2, m⁴ eine ganze Zahl von 1 bis 4 und K⁴ das Verhältnis m⁴/h ist.

13. Zusammensetzung nach Anspruch 12, wobei der laserlichtdurchlässige schwarze Farbstoff, der sich zum Vermischen mit einem thermoplastischen Harz eignet, zumindest ein Aminsalz von Anthrachinonfarbstoffen mit der Formel [I] aufweist, wobei mindestens eine der Komponenten R⁹, R¹⁰, R¹¹, R¹² und R¹³ von Formel [I-a] eine Sulfonylgruppe ist.

14. Schwarzer Farbstoff nach Anspruch 12 oder Zusammensetzung nach Anspruch 2, worin das Aminsalz des Anthrachinonfarbstoffs eine Verbindung umfasst, wie in den nachfolgenden Tabellen aufgeführt:
**TABELLE 1-1**
| Pro. Ex. No. | R¹, R², R³, R⁴, R⁵, R⁶, R⁷, R⁸ | K¹(Z)ⁿ⁺ |
|---|---|---|
| I-1 | R²=R⁵=R⁶=R⁷=R⁸=H,R⁴=OH,R¹=R³=I-a, Formel [I-a]:X=NH,R¹¹=NO₂,R⁹=SO₃H oder SO₃⁻ R¹⁰=R¹²=R¹³=H | Kolophoniumammonium |
| I-2 | R²=R³=R⁵=R⁶=R⁷=R⁸=H,R⁴=OH,R¹=I-a Formel [I-a]:X=NH,R¹¹=CH₃,R⁹=SO₃,R¹⁰=R¹²=R¹³=H | H₃N⁺(CH₂)₆NH₂ |
| I-3 | R²=R³=R⁵=R⁶=R⁷=R⁸=H,R¹=I-a,R⁴=Y-W, Formel [I-a]:X=NH,R¹¹=CH₃,R⁹=SO₃⁻,R¹⁰=R¹²=R¹³=H Y-W:Y=NH,W=CH₃ | C₁₂H₂₅N⁺H₃ |
| I-4 | R²=R³=R⁵=R⁶=R⁷=R⁸=H,R¹=R⁴=I-a, Formel [I-a]:X=NH,R¹¹=CH₃R⁹=SO₃H oder SO₃⁻,R¹⁰=R¹²=R¹³=H | (C₄H₉)₄N⁺ |
| I-5 | R²=R³=R⁵=R⁶=R⁷=R⁸=H,R¹=R⁴=I-a, Formel [I-a]:X=NH,R⁹=R¹¹=R¹³=CH₃,R¹²=SO₃H oder SO₃⁻ ,R¹⁰=H | H₃N⁺(CH₂)₆NH₂ |
| I-6 | R²=R³=R⁵=R⁶=R⁷=R⁸=H,R¹=R⁴=I-a, Formel [I-a]:X=NH,R¹¹=CH₃,R⁹=SO₃⁻,R¹⁰=R¹²=R¹³=H | (N⁺H₃)₂CNH |
| I-7 | R²=R³=R⁵=R⁶=R⁷=R⁸=H,R¹=R⁴=I-a, Formel [I-a]:X=NH,R¹¹=C₄H₉R⁹=SO₃H oder SO₃⁻ ,R¹⁰=R¹²=R¹³=H | H₃N⁺(CH₂)₆NH₂ |
| I-8 | R²=R³=R⁵=R⁷=R⁸=H,R¹=R⁴=I-a,R⁶=Y-W, Formel [I-a]:X=NH,R¹¹=CH₃,R⁹=SO₃H oder SO₃⁻ R¹⁰=R¹²=R¹³=H Y-W:Y=S,W= Methylphenyl | H₃N⁺(CH₂)₄NH₂ |
| I-9 | R²=R³=R⁵=R⁶=R⁷=R⁸=H,R¹=R⁴=I-a, Formel [I-a]:X=NH,R¹¹=C₄H₉,R⁹=SO₃⁻ ;R¹⁰=R¹²=R¹³=H | 2(H₃N⁺(CH₂)₆NH₂) |
| I-10 | R²=R⁵=R⁶=R⁷=R⁸=H,R³=SO₃⁻,R⁴=NH₂,R¹=I-a, Formel [I-a]:X=NH,R¹¹=N(C₃H₇)COCH₃,R⁹=R¹⁰=R¹²=R¹³=H | N-Trimethyl-N-benzylammonium |
| I-11 | R²=R⁵=R⁷=R⁸=H,R³=R⁶=SO₃⁻ ,R⁴=NH₂,R¹=I-a, Formel [I-a]:X=NH,R¹¹=NHCOCH₃,R⁹=R¹⁰=R¹²=R¹³=H | 2(CH₃)₄N⁺ |
| I-12 | R²=R³=R⁵=R⁶=R⁷=R⁸=H,R¹=R⁴=I-a, Formel [I-a]:X=NH,R⁹=R¹¹=R¹³=CH₃,R¹²=SO₃H oder SO₃⁻ R¹⁰=H | Diphenylguanidin-Diphenylguanidin-ammonium |
| I-13 | R²=R³=R⁵=R⁶=R⁷=R⁸=H,R¹=R⁴=I-a, Formel [I-a]:X=NH,R¹¹=CH₃R⁹=SO₃H oder SO₃⁻ ;R¹⁰=R¹²=R¹³=H | Bis(p-Methylphenyl)guanidin-ammonium |
| I-14 | R²=R³=R⁴=R⁵=R⁶=R⁷=H,R¹=R⁸=I-a, Formel [I-a]:X=NH,R¹¹=CH₃,R⁹=SO₃H oder SO₃⁻ R¹⁰=R¹²=R¹³=H | C₁₂H₂₅N⁺H₃ |
| I-15 | R⁵=R⁶=R⁷=R⁸=H,R¹=R⁴=NH₂,R²=R³=I-a, Formel [I-a]:X=O,R¹¹=CH₃,R⁹=SO₃H oder SO₃⁻,R¹⁰=R¹²=R¹³=H | (CH₃)₄N⁺ |
| | | |
|---|---|---|
| Pro. Ex. No. = Produktbeispielsnummer | | |
**TABELLE 1-2**
| Pro. Ex. No. | R¹, R², R³, R⁴, R⁵, R⁶, R⁷ ,R⁸ | K¹(Z)ⁿ⁺ |
|---|---|---|
| I-16 | R⁵=R⁶=R⁷=R⁸=H,R¹=R⁴=NH₂,R²=R³=I-a, Formel [I-a]:X=O,R¹¹=SO₃H oder SO₃⁻,R⁹=R¹⁰=R¹²=R¹³=H | H₃N⁺(CH₂)₆NH₂ |
| I-17 | R³=R⁶=R⁷=R⁸=H,R²=CH₃,R⁴=NH₂,R⁵=SO₃H SO₃,R¹=I-a, Formel [I-a]:X=NH,R¹¹=CH₃,R⁹=SO₃H oder SO₃-,R¹⁰=R¹²=R¹³=H | C₄H₉N⁺H₃ |
| I-18 | R³=R⁶=R⁷=R⁸=H,R²=Br,R⁴=NH₂,R⁵=SO₃H oder SO₃⁻ ,R¹=I-a, Formel [I-a]:X=NH,R¹¹=CH₃,R⁹=SO₃H oder SO₃⁻ ,R¹⁰=R¹²=R¹³=H | H₃N⁺(CH₂)₄NH₂ |
| I-19 | R²=R⁶=R⁷=R⁸=H,R³=OC₁₂,H₂₅,R⁴=NH₂,R⁴=SO₃H oder SO₃⁻,R¹=I- a, Formel [I-a]:X=NH,R¹¹=SO₃H or SO₃⁻,R⁹=R¹⁰=R¹²=R¹³=H | C₂H₅OC₃H₆NH₃⁺ |
| I-20 | R²=R³=R⁶=R⁷=HR⁴=R⁸=OHR¹=R⁵=I-a, Formel [I-a]:X=NH,R¹¹=CH₃,R⁹=SO₃H oder SO₃⁻ ,R¹⁰=R¹²=R¹³=H | (C₈H₁₇)₄N⁺ |
| I-21 | R²=R³=R⁵=R⁶=R⁷=R⁸=H,R¹=R⁴=I-a, Formel [I-a]:X=NH,R⁹=R¹¹=R¹³=CH₃,R¹²=SO₃⁻,R¹⁰=H | 2(H₃N⁺(CH₂)₆NH₂) |
| I-22 | R²=R⁵=R⁶=R⁷=R⁸=H,R³=SO₃⁻,R⁴=NH₂,R¹=I-a, Formel [I-a]:X=NH,R¹¹=NHCOCH₃,R⁹=R¹⁰=R¹²=R¹³=H | C₄H₉N⁺H₃ |
| I-23 | R²=R³=R⁵=R⁶=R⁷=R⁸=H,R¹=R⁴=I-a, Formel [I-a]:X=NH,R¹¹=CH₃,R⁹=SO₃H oder SO₃⁻ ,R¹⁰=R¹²=R¹³=H | H₃N⁺(CH₂)₆NH₂ |
| I-24 | R²=R³=R⁴=R⁵=R⁶=R⁷=H,R¹=R⁸=I-a, Formel [I-a]:X=NH,R¹¹=CH₃,R⁹=SO₃H oder SO₃⁻ R¹⁰=R¹²=R¹³=H | C₂H₅OC₃H₆NH₃⁺ |
| I-25 | R²=R⁵=R⁶=R⁷=R⁸=H,R³=SO₃⁻,R⁴=NH₂,R¹=I-a, Formel [I-a]:X=NH,R¹¹=NHCOCH₃,R⁹=R¹⁰=R¹²=R13=H | H₃N⁺(CH₂)₆NH₂ H₃N⁺(CH₂)₆NH₂ |
| I-26 | R²R⁵=R⁶=R⁷=R⁸=H,R³=SO₃⁻,R⁴=NH₂,R¹=I-a, Formel [I-a]:X=NH,R¹¹=N(CH₃)COCH₃,R⁹=R¹⁰=R¹²=R¹³=H | Cyclohexylammonium |
| I-27 | R²=R³=R⁵=R⁶=R⁷=R⁸=H,R¹=R⁴=I-a, Formel [I-a]:X=NH,R⁹=R¹¹=R¹³=CH₃,R¹²=SO₃H oder SO₃⁻ R¹⁰=H | C₂H₅OC₃H₆N⁺H₃ |
| I-28 | R²=R³=R⁵=R⁶=R⁷=R⁸=H,R⁴=OH,R¹=I-a" Formel [I-a]:X=NH,R¹¹=CH₃, R⁹=SO₃⁻,R¹⁰=R¹²=R¹³=H | H₃N⁺(CH₂)₆NH₂ |
| I-29 | R²=R⁵=R⁶=R⁷=R⁸=H,R³=SO₃⁻ ;R⁴=NH₂,R¹=I-a, Formel [I-a]:X=NH,R¹¹=N(CH₃)COCH₃,R⁹=R¹⁰=R¹²=R¹³=H | N-Trimethyl-N-benzylammonium |
| I-30 | R³=R⁵=R⁶=R⁷=R⁸=H,R¹=R⁴=OH,R²=I-a, Formel [I-a]:X=NH,R⁹=CH₃,R¹¹=SO₃;R¹⁰=R¹²=R¹³=H | N-Tributyl-N-benzylammonium |
| I-31 | R⁵=R⁶=R⁷=R⁸=H,R¹=R⁴=NH₂R³=SO₃⁻;R²=I-a, Formel [I-a]:X=O,R⁹=R¹⁰=R¹¹=R¹²=R¹³=H | C₄H₉N⁺H₃ |
| I-32 | R³=R⁶=R⁷=R⁸=H,R⁴=NH₂,R²=R⁵=SO₃H oder SO₃,R¹=I-a, Formel [I-a]:X=NH,R¹¹=C₁₂H₂₅R⁹=R¹⁰-R¹²=R¹³=H | Benzylharnstoffammonium |
| I-33 | R²=R⁵=R⁶=R⁷=R⁸=H,R³=SO₃⁻,R⁴=NH₂,R¹=I-a, Formel [I-a):X=NH,R¹⁰=COOC₂H₅,R⁹=R¹¹=R¹²=R¹³=H | H₃N⁺(CH₂)₆NH₂ |
| | | |
|---|---|---|
| Pro. Ex. No. = Produktbeispielsnummer | | |
**TABELLE 2**
| Pro. Ex. No. | J | R⁴⁷ | R⁴⁸ | R⁴⁹ | R⁵⁰ | R⁵¹ | R¹² | K⁴(F)^{h+} |
|---|---|---|---|---|---|---|---|---|
| II-1 | Formel [II-a] | SO₃⁻ | NH₂ | H | SO₃⁻ | NH₂ | H | 2(H₃N⁺(CH₂)₆NH₂)⁺ |
| II-2 | Formel [II-a] | SO₃⁻ | NH₂ | H | SO₃H | NH₂ | H | H₃N⁺(CH₂)₆NH₂ |
| II-3 | Formel [II-a] | SO₃⁻ | OH | H | SO₃H | OH | H | C₁₂H₂₅N⁺H₃ |
| II-4 | Formel [II-b], R⁵³=R⁵⁴=H | SO₃⁻ | NH₂ | H | NH₂ | Cl | H | C₂H₅OC₃H₆N⁺H₃ |
| II-5 | Formel [II-b], R⁵³=R⁵⁴=CH₃ | SO₃⁻ | NH₂ | H | SO₃H | NH₂ | H | Bis(p-Methylphenyl)-guanidinammonium |
| II-6 | Formel [II-b], R⁵³=R⁵⁴=CH₃ | SO₃⁻ | NH₂ | H | SO₃⁻ | NH₂ | H | H₃N⁺(CH₂)₄N⁺H₃ |
| II-7 | Formel [II-b], R⁵³=R⁵⁴=H | SO₃⁻ | NH₂ | H | SO₃H | NH₂ | H | Kolophoniumammonium |
| II-8 | Formel [II-b], R⁵³=R⁵⁴=H | SO₃⁻ | NH₂ | H | SO₃H | NH₂ | H | H₃N⁺(CH₂)₆NH₂ |
| II-9 | Formel [II-b], R⁵³=H, R⁵⁴= Phenyl | SO₃⁻ | OH | OCH₃ | SO₃H | OH | OCH₃ | (C₄H₉)₄N⁺ |
| II-10 | Formel [II-b], R⁵³=R⁵⁴=H | SO₃⁻ | C₃H₉ | C₃H₉ C₃H₉ | SO₃H | H | H | N-Tributyl-N-benzylammonium |
| | | | | | | | | |
|---|---|---|---|---|---|---|---|---|
| Pro. Ex. No. = Produktbeispielsnummer | | | | | | | | |

## Revendications

1. Composition de résine thermoplastique pour soudure au laser, comprenant:
1) une résine thermoplastique; et
2) un colorant noir transmettant la lumière laser, qui transmet la lumière de laser en proche infra-rouge de 800 - 1200 nm, comprenant un sel d'amine de colorant d'anthraquinone.

2. Composition de résine thermoplastique pour soudure au laser, comprenant:
1) une résine thermoplastique; et
2) un colorant noir transmettant la lumière laser, qui transmet la lumière de laser en proche infra-rouge de 800 - 1200 nm, comprenant un sel d'amine de colorants d'anthraquinone de la formule [I] ou de la formule [II], où la formule [I] est: 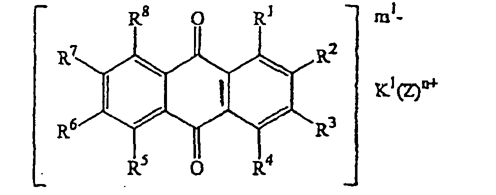
où R¹ à R⁸, qui peuvent être identiques ou différents, sont sélectionnés indépendamment parmi le groupe constitué des radicaux H, alkyle, aryle, alcényle, alkoxy, amino, hydroxy, atome d'halogène, acyle, acyloxy, acylamide, acyl-N-alkylamide, carboxyle, alkoxycarbonyle, cyclohexylamide, sulfonyle, de formule [I-a] ou -Y-W et au moins l'un de R¹ à R⁸ est de la formule [I-a]; où Y est S, O, ou NH; où W est sélectionné parmi les groupements alkyle, alcényle non substitués ou substitués et parmi les groupements aryles, non substitués ou substitués; où (Z)ⁿ⁺ représente un ion d'ammonium ou un cation dérivé d'un composé d'amine organique ou d'un colorant basique; où n est 1 ou 2, m¹ est un entier allant de 1 à 4 et K¹ est le rapport ml/n;
et où la formule [I-a] est: 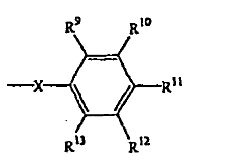 où X est O ou NH, et R⁹ à R¹³, qui peuvent être identiques ou différents, sont sélectionnés indépendamment parmi le groupe constitué des radicaux H, alkyle, aryle, alcényle, alkoxy, amino, N-alkylamide, N-arylamide, hydroxy, atome d'halogène, acyle, acyloxy, acylamide, acyl-N-alkylamide, carboxyle, alkoxycarbonyle, ou sulfonyle; où au moins l'un de R¹ à R⁸ et de R⁹ à R¹³ est le groupement sulfonyle; et où la formule [II] est: 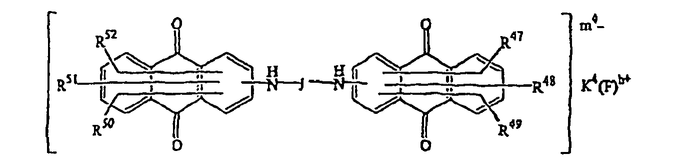 où R⁴⁷ à R⁵², qui peuvent être identiques ou différents, sont sélectionnées indépendamment du groupe constitué des radicaux H, alkyle, aryle, alcényle, alkoxy, amino, N-alkylamide, N-arylamide, hydroxy, atome d'halogène, acyle, acyloxy, acylamide, acyl-N-alkylamide, carboxyle, alkoxycarbonyle ou sulfonyle; et au moins l'un de R⁴⁷ à R⁵² est un radical sulfonyle; et
la formule J dans la formule [II] est sélectionnée parmi la formule [II-a] ou la formule [II-b] et lie deux anthraquinones,
où la formule [II-a] est: 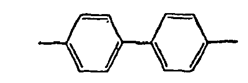 et la formule [II-b] est: 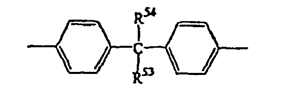 où R⁵³ à R⁵⁴, qui peuvent être identiques ou différents, sont sélectionnés indépendamment parmi le groupe constitué des radicaux alkyles (ayant de 1 à 8 atomes de carbone) ou l'hydrogène ;
et où (F)^{h+} représente un ion ammonium ou un cation dérivé d'un composé amino organique ou d'un colorant basique où h est 1 ou 2, m⁴ est un entier allant de 1 à 4 et K⁴ est le rapport de m⁴/ h.

3. Composition selon la revendication 1, comprenant en outre un deuxième colorant mélangé audit sel d'amine dudit colorant d'anthraquinone pour produire un colorant noir transmettant la lumière laser.

4. Composition selon la revendication 2, comprenant en outre un deuxième colorant mélangé audit sel d'amine dudit colorant d'anthraquinone pour produire un colorant noir transmettant la lumière laser.

5. Composition selon la revendication 4, dans lequel ledit deuxième colorant est sélectionné parmi le groupe constitué des colorants de périnone, des colorants complexes mono azoïques, des colorants d'anthrapyridone et des colorants d'anthraquinone.

6. Composition selon la revendication 2, comprenant en outre (i) un colorant rouge à mélanger audit sel d'amine dudit colorant d'anthraquinone pour produire un colorant noir transmettant la lumière laser, ledit colorant rouge étant sélectionné parmi le groupe constitué de colorants de périnone, de colorants complexes mono azoïques et de colorants d'anthrapyridone; et (ii) un colorant jaune supplémentaire à ajouter audit mélange, sélectionné parmi le groupe des colorants complexes mono azoïques et de colorants d'anthraquinone.

7. Composition selon l'une quelconque des revendications 1-6, dans laquelle ladite résine thermoplastique est un polyamide ou un polyester.

8. Composition selon la revendication 7, comprenant en outre un agent de renforcement.

9. Article transparent à la lumière laser, formé à partir de la composition selon l'une quelconque des revendications 1-6.

10. Article formé par soudure au laser d'un article opaque à l'aide de l'article transparent à la lumière laser selon la revendication 9.

11. Colorant noir transmettant la lumière laser, qui transmet la lumière de laser en proche infra-rouge de 800 - 1200 nm, approprié au mélange avec une résine thermoplastique comprenant au moins un sel d'amine de colorants d'anthraquinone.

12. Colorant noir transmettant la lumière laser, qui transmet la lumière de laser en proche infra-rouge de 800 - 1200 nm, approprié au mélange avec une résine thermoplastique comprenant au moins un sel d'amine de colorants d'anthraquinone de la formule [I] ou de la formule [II].
où la formule [I] est 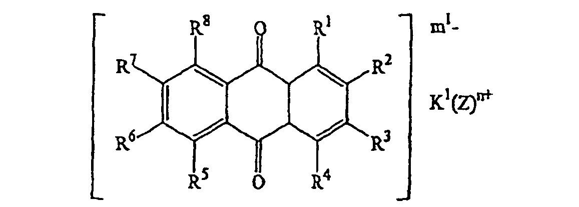 où R¹ à R⁸, qui peuvent être identiques ou différents, sont sélectionnés indépendamment parmi le groupe constitué des radicaux H, alkyle, aryle, alcényle, alkoxy, amino, hydroxy, atome d'halogène, acyle, acyloxy, acylamide, acyl-N-alkylamide, carboxyle, alkoxycarbonyle, cyclohexylamide, sulfonyle, de formule [I-a] ou -Y-W et au moins l'un de R¹ à R⁸ est de la formule [I-a]; où Y est S, O, ou NH; où W est sélectionné parmi les groupements alkyle, alcényle, non substitués ou substitués, et les groupements aryles, non substitués ou substitués; où (Z)ⁿ⁺ représente un ion d'ammonium ou un cation dérivé d'un composé d'amine organique ou d'un colorant basique; où n est 1 ou 2, m¹ est un entier allant de 1 à 4 et K¹ est le rapport m¹/n;
et où la formule [I-a] est: 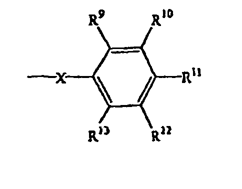 où X est O ou NH, et R⁹ à R¹³, qui peuvent être identiques ou différents, sont sélectionnés indépendamment parmi le groupe constitué des radicaux H, alkyle, aryle, alcényle, alkoxy, amino, N-alkylamide, N-arylamide, hydroxy, atome d'halogène, acyle, acyloxy, acylamide, acyl-N-alkylamide, carboxyle, alkoxycarbonyle, ou sulfonyle; où au moins l'un de R¹ à R⁸ et de R⁹ à R¹³ est le groupement sulfonyle; et où la formule [II] est: 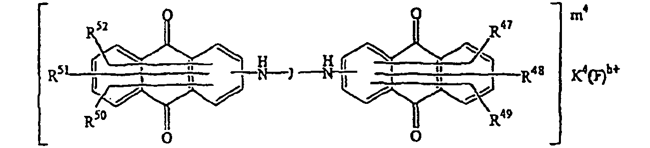 où R⁴⁷ à R⁵², qui peuvent être identiques ou différents, sont sélectionnées indépendamment du groupe constitué des radicaux H, alkyle, aryle, alcényle, alkoxy, amino, N-alkylamide, N-arylamide, hydroxy, atome d'halogène, acyle, acyloxy, acylamide, acyl-N-alkylamide, carboxyle, alkoxycarbonyle ou sulfonyle; et au moins l'un de R⁴⁷ à R⁵² est un radical sulfonyle; et
la formule J dans la formule [II] est sélectionnée parmi la formule [II-a] ou la formule [II-b] et lie deux anthraquinones,
où la formule [II-a] est: 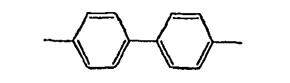 et où la formule [II-b] est: 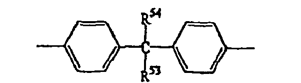 où R⁵³ à R⁵⁴, qui peuvent être identiques ou différents, sont indépendamment sélectionnés parmi le groupe constitué de radicaux alkyles (ayant 1 à 8 atomes de carbone) ou l'hydrogène; et où (F)^{h+} représente un ion ammonium ou un cation dérivé d'un composé amino organique ou d'un colorant basique, où h est 1 ou 2, m⁴ est un entier allant de 1 à 4 et K⁴ est le rapport m⁴/ h.

13. Composition selon la revendication 12, où, dans le colorant noir, transmettant la lumière laser, approprié au mélange avec une résine thermoplastique, comprenant au moins un sel d'amine de colorants d'anthraquinone de la formule [I] au moins l'un de R⁹, R¹⁰, R¹¹, R¹² et R¹³ de la formule [I-a] est un groupement sulfonyle.

14. Colorant noir selon la Revendication 12 ou la composition selon la Revendication 2, dans laquelle le sel d'amine du colorant anthraquinone comprend un composé décrit dans les tableaux suivants:
**TABLEAU 1-1**
| Pro. Ex. No. | R', R², R³, R⁴, R⁵, R⁶, R⁷, R⁸ | K¹(Z)ⁿ⁺ |
|---|---|---|
| I-1 | R²=R⁵=R⁶=R⁷=R⁸=H,R⁴=OH,R¹=R³=I-a, Formule[I-a]:X=NH,R¹¹=NO₂R⁹=SO₃H ou SO₃⁻ R¹⁰=R¹²=R¹³=H | Ammonium de colophane |
| I-2 | R²=R³=R⁵=R⁶=R⁷=R⁸=H,R⁴=OH,R¹=I-a, Formule[I-a]:X=NH,R¹¹=CH₃,R⁹=SO₃⁻;R¹⁰=R¹²=R¹³=H | H₃N⁺(CH₂)₆NH₂ |
| I-3 | R²=R³=R⁵=R⁶=R⁷=R⁸=H,R¹=I-a;R⁴=Y-W, Formule[I-a]:X=NH,R¹¹=CH₃,R⁹=SO₃⁻ ;R¹⁰=R¹²=R¹³=H Y-W:Y=NH,W=CH₃ | C₁₂H₂₅N⁺H₃ |
| I-4 | R²=R³=R⁵=R⁶=R⁷=R⁸=H,R¹=R⁴=I-a, Formule [I-a]:X=NH,R¹¹=CH₃,R⁹=SO₃H or SO₃⁻,R¹⁰=R¹²=R¹³=H | (C₄H₉)₄N⁺ |
| I-5 | R²=R³=R⁵=R⁶=R⁷=R⁸=H,R¹=R⁴=I-a, Formule[I-a]:X=NH,R⁹=R¹¹=R¹³=CH₃,R¹²=SO₃H ou SO₃⁻ ,R¹⁰=H | H₃N⁺(CH₂)NH₂ |
| I-6 | R²=R³=R⁵=R⁶=R⁷=R⁸=H,R¹=R⁴=I-a, Formule [I-a]:X-NH,R¹¹=CH₃R⁹=SO₃⁻,R¹⁰R¹²=R¹³=H | (N⁺H₃)₂CNH |
| I-7 | R²=R³=R⁵=R⁶=R⁷=R⁸=H,R¹=R⁴=I-a, Formule [I-a]:X=NH,R¹¹=C₄H₉R⁹=SO₃H ou SO₃⁻ R¹⁰=R¹²=R¹³=H | H₃N⁺(CH₂)₆NH₂ |
| I-8 | R²=R³=R⁵=R⁷=R⁸=H,R¹ =R⁴=I-a,R⁶=Y-W, Formule [I-a]:X=NH,R¹¹=CH₃,R⁹=SO₃H ou SO₃⁻ R¹⁰=R¹²=R¹³=H Y-W:Y=S,W= méthylphényl | H₃N⁺(CH₂)₄NH₂ |
| I-9 | R²=R³=R⁵=R⁶=R⁷=R⁸=H,R¹=R⁴=I-a, Formule [I-a]:X=NH,R¹¹=C₄H₉,R⁹=SO₃⁻ ,R¹⁰=R¹²=R¹³=H | 2(H₃N⁺(CH₂)₆NH₂) |
| I-10 | R²=R⁵=R⁶=R⁷=R⁸=H,R⁴=SO₃⁻,R⁴=NH₂,R¹=I-a, Formule,[I-a] :X=NH,R¹¹=N(C₃H₇)COCH₃,R⁹=R¹⁰=R¹²=R¹³=H | Ammonium de N-triméthyl-N-benzyle |
| I-11 | R²=R⁵=R⁷=R⁸=H,R³=R⁶=SO₃⁻ ;R⁴=NH₂,R¹=I-a Formule [I-a]:X=NH,R¹¹=NHCOCH₃,R⁹=R¹⁰=R¹²=R¹³=H | 2(CH₃)₄N⁺ |
| I-12 | R²=R³=R⁵=R⁶=R⁷=R⁸=H,R¹=R⁴=I-a, Formule[I-a]:X=NH,R⁹=R¹¹=R¹³=CH₃,R¹²=SO₃H ou SO₃⁻ R¹⁰=H | Ammonium de diphénylguanidine |
| I-13 | R²=R³=R⁵=R⁶=R⁷=R⁸=H,R¹=R⁴=I-a, Formule[I-a]:X=NH,R¹¹=CH₃,R⁹=SO₃H ou SO₃⁻,R¹⁰=R¹²=R¹³=H | Ammonium de Bis(p-méthylphényl)guanidin |
| I-14 | R²=R³=R⁴=R⁵=R⁶=R⁷=H,R¹=R⁸=I-a, Formule[I-a]:X=NH,R¹¹=CH₃,R⁹=SO₃H ou SO₃⁻ ,R¹⁰=R¹²=R¹³=H | C₁₂H₂₅N⁺H₃ |
| I-15 | R⁵=R⁶=R⁷=R⁸=H,R¹=R⁴=NH₂,R²=R³=I-a, Formule [I-a]:X=O,R¹¹=CH₃,R⁹=SO₃H ou SO₃⁻,R¹⁰=R¹²=R¹³=H | (CH₃)₄N⁺ |
| | | |
|---|---|---|
| Pro. Ex. No.= Numéro du produit example | | |
**TABLEAU 1-2**
| Pro. Ex. No. | R¹, R², R³, R⁴, R⁵, R⁶, R⁷ ,R⁸ | K¹(Z)ⁿ⁺ |
|---|---|---|
| I-16 | R⁵=R⁶=R⁷=R⁸=H,R¹=R⁴=NH₂,R²=R³=I-a, R¹⁰=R¹²=R¹³=H Formule [I-a]:X=O,R¹¹=SO₃H ou SO₃⁻ ,R⁹=R¹⁰=R¹²=R¹³=H | H₃N⁺(CH₂)₆NH₂ |
| I-17 | R³=R⁶=R⁷=R⁸=H,R²=CH₃,R⁴=NH₂,R⁵=SO₃H ou SO₃,R¹=I-a, Formule [I-a]:X=NH,R¹¹=CH₃,R⁹=SO₃H ou SO₃⁻ R¹⁰=R¹¹=R¹³=H | C₄H₉N⁺H₃ |
| I-18 | R³=R⁶=R⁷=R⁸=H,R²=Br,R⁴=NH₂,R⁵=SO₃H ou SO₃⁻ ,R¹=I-a, Formule [I-a]:X=NH,R¹¹=CH₃,R⁹=SO₃H ou SO₃⁻ R¹⁰=R¹¹=R¹³=H | H₃N⁺(CH₂)₄NH₂ |
| I-19 | R²=R⁶=R⁷=R⁸=H,R³=OC₁₂H₂₅,R⁴=NH₂,R⁵=SO₃H ou SO₃⁻ ,R¹=I-a, Formule [I-a]:X=NH,R¹¹=SO₃H or SO₃⁻,R⁹=R¹⁰=R¹²=R¹³=H | C₂H₅OC₃H₆NH₃ |
| I-20 | R²=R³=R⁶=R⁷=H'R⁴=R⁸=OHR¹=R⁵=I-a, Formule[I-a]:X=NH,R¹¹=CH₃,R⁹=SO₃H ou SO₃⁻ ,R¹⁰=R¹²=R¹³=H | (C₈H₁₇)₄N⁺ |
| I-21 | R²=R³=R⁵=R⁶=R⁷=R⁸=H,R¹=R⁴=I-a, 2(H₃N⁺(CH₂)₆NH₂ Formule[I-a]:X=NH,R⁹=R¹¹=R¹³=CH₃,R¹²=SO₃⁻,R¹⁰=H | |
| I-22 | R²=R⁵=R⁶=R⁷=R⁸=H,R³=SO₃⁻,R⁴=NH₂,R¹=I-a, Form ule [I-a]:X=NH,R¹¹=NHCOCH₃,R⁹=R¹⁰=R¹²=R¹³=H | C₄H₉N⁺H₃ |
| I-23 | R²=R³=R⁵=R⁶=R⁷=R⁸=H,R¹=R⁴=I-a, Formule [I-a]:X=NH,R¹¹=CH₃,R⁹=SO₃H ou SO₃⁻ ,R¹⁰=R¹²=R¹³=H | H₃N⁺(CH₂)₆NH₂ |
| I-24 | R²=R³=R⁴=R⁵=R⁶=R⁷=H,R¹=R⁸=I-a, Formule[I-a]:X=NH,R¹¹=CH₃,R⁹=SO₃H ou SO₃⁻ R¹⁰=R¹²=R¹³=H | C₂H₅OC₃H₆NH₃⁺ |
| I-25 | R²=R⁵=R⁶=R⁷=R⁸=H,R³=SO₃⁻,R⁴ NH₂,R¹=I-a, Formule [I-a]:X=NH,R¹¹=NHCOCH₃,R⁹=R¹⁰=R¹²=R¹³=H | H₃N⁺(CH₂)₆NH₂ |
| I-26 | R²=R⁵=R⁶=R⁷=R⁸=H,R³=SO₃⁻,R⁴=NH₂,R¹=I-a, Formule[I-a]:X=NH,R¹¹=N(CH₃)COCH₃,R⁹=R¹⁰=R¹²=R¹³=H | Ammonium de cyclohexyle |
| I-27 | R²=R³=R⁵=R⁶=R⁷=R⁸=H,R¹=R⁴=I-a, Formule[I-a]:X=NH,R⁹=R¹¹=R¹³=CH₃,R¹²=SO₃H ou SO₃⁻ ,R¹⁰=H | C₂H₅OC₃H₆N⁺H₃ |
| I-28 | R²=R³=R⁵=R⁸=R⁷=R⁸=H,R⁴=OH,R¹=I-a, ¹²=R^{1 13}=H Formule [I-a]:X=NH,R¹¹=CH₃,R⁹=SO₃⁻,R¹⁰=R¹²=R¹³=H | H₃N⁺(CH₂)₆NH₂ |
| I-29 | R²=R⁵=R⁶=R⁷=R⁸=H,R³=SO₃⁻, R⁴=NH₂,R¹=I-a, Formule [I-a]:X=NH,R¹¹=N(CH₃)COCH₃,R⁹=R¹⁰=R¹²=R¹³=H | Ammonium de N-triméthyl-N-benzyle |
| I-30 | R³=R⁵=R⁶=R⁷=R⁸=H,R¹=R⁴=OH,R²=I-a, Formule [I-a]:X=NH,R⁹=CH₃,R¹¹=SO₃⁻,R¹⁰=R¹²=R¹³=H | Ammonium de N-tributyl-N-benzyle |
| I-31 | R⁵=R⁶=R⁷=R⁸=H,R¹=R⁴=NH₂,R³=SO₃⁻,R²=I-a, Formule[I-a ]:X=O,R⁹=R¹⁰=R¹¹=R¹²=R¹³=H | C₄H₉N⁺H₃ |
| I-32 | R³=R⁶=R⁷=R⁸=H,R⁴=NH₂,R²=R⁵=SO₃H ou SO₃⁻, R¹=I-a, Formule [I-a]:X=NH,R¹¹=C₁₂H₂₅R⁹=R¹⁰=R¹²=R¹³=H | Ammonium de benzylurée |
| I-33 | R²=R⁵=R⁶=R⁷=R⁸=H,R³=SO₃⁻,R⁴=NH₂,R¹=I-a, Formule [I-a]:X=NH,R¹⁰=COOC₂H₅,R⁹=R¹¹=R¹²=R¹³=H | H₃N⁺(CH₂)₆NH₂ |
| | | |
|---|---|---|
| Pro. Ex. No.= Numéro du produit example | | |
**TABLEAU 2**
| Pro. Ex. No. | J | R⁴⁷ | R⁴⁸ | R⁴⁹ | R⁵⁰ | R⁵¹ | R⁵² | K⁴(F)^{h+} |
|---|---|---|---|---|---|---|---|---|
| II-1 | Formule [II-a] | SO₃⁻ | NH₂ | H | SO₃⁻ | NH₂ | H | 2(H₃N⁺(CH₂)₆NH₂)⁺ |
| II-2 | Formule [II-a] | SO₃⁻ | NH₂ | H | SO₃H | NH₂ | H | H₃N⁺(CH₂)NH₂ |
| II-3 | Formule [II-a] | SO₃⁻ | OH | H | SO₃H | OH | H | C₁₂H₂₅N⁺H₃ |
| II-4 | Formule [II-b], R⁵³=R⁵⁴=H | SO₃⁻ | NH₂ | H | NH₂ | CI | H | C₂H₅OC₃H₆N⁺H₃ |
| II-5 | Formule [II-b], R⁵³=R⁵⁴=CH₃ | SO₃ | NH₂ | H | SO₃H | NH₂ | H | Ammonium de Bis(p-méthylphényl) quanidine |
| II-6 | Formule [II-b], R⁵³=R⁵⁴=CH₃ | SO₃⁻ | NH₂ | H | SO₃⁻ | NH₂ | H | H₃N⁺(CH₂)₄N⁺H₃ |
| II-7 | Formule [II-b], R⁵³=R⁵⁴=H | SO₃⁻ | NH₂ | H | SO₃H | NH₂ | H | Ammonium de colophane |
| II-8 | Formule [II-b], R⁵³=R⁵⁴=H | SO₃⁻ | NH₂ | H | SO₃H | NH₂ | H | H₃N⁺(CH₂)₆NH₂ |
| II-9 | Formule [II-b], R⁵³=H, R⁵⁴= phényl | SO₃⁻ | OH | OCH₃ | SO₃H | OH | OCH₃ | (C₄H₉)₄N⁺ |
| II-10 | Formule[II-b], R⁵³=R⁵⁴=H | SO₃⁻ | C₃H₉ | C₃H₉ | SO₃H | H | H | Ammonium de N-tributyl-N-benzyle |
| | | | | | | | | |
|---|---|---|---|---|---|---|---|---|
| Pro. Ex. No.= Numéro du produit example | | | | | | | | |
